# EUROPEAN PATENT APPLICATION

(11) **EP 4 497 493 A1**
(43) Date of publication of application: **29.01.2025**
(21) Application number: 23775139.1
(22) Date of filing: 20.01.2023
(51) Int. Cl.: B01D 53/22, B01D 61/58, B01D 63/02, B01D 53/00

(54) **FLUID RECOVERY SYSTEM AND FLUID RECOVERY METHOD USING SAME**

(30) Priority: 23.03.2022 KR 20220035695
(71) Applicant: LS Electric Co., Ltd., Gyeonggi-do 14119 (KR)
(72) Inventor: KIM, Sang Eon, Anyang-si, Gyeonggi-do 14118 (KR); KIM, Yong Gi, Anyang-si, Gyeonggi-do 14118 (KR); KIM, Han Gil, Anyang-si, Gyeonggi-do 14118 (KR); LEE, Gun Hyun, Anyang-si, Gyeonggi-do 14118 (KR); CHO, Wook Dong, Anyang-si, Gyeonggi-do 14118 (KR); SHIN, Ha Min, Anyang-si, Gyeonggi-do 14118 (KR)
(74) Representative: K&L Gates LLP
(86) International application number: PCT/KR2023/001062
(87) International publication number: WO 2023/182636

(57) **Abstract**

A fluid recovery system, according to one aspect of the present invention, comprises: a communication unit that communicates with the outside and introduces a mixed fluid; and a fluid separation unit that is configured to communicate with the communication unit and separate the introduced mixed fluid into at least two different fluids, wherein the fluid separation unit includes: a filter member that is configured to communicate with the communication unit, receive the introduced mixed fluid, and separate the received mixed fluid into the at least two different fluids; and a collecting member that is configured to communicate with the filter member and collect a part of any one fluid of the separated fluids, wherein the communication unit includes: a collecting communication unit that is configured to communicate with the outside and discharge the part of the any one fluid of the separated fluids; and an exhaust communication unit that is configured to communicate with the outside and discharge the other fluids from among the separated fluids, wherein the part of the any one fluid and the other fluids may be in different phases.

## Description

### [Technical Field]

The present invention relates to a fluid recovery system and a fluid recovery method using the same, and more specifically to a fluid recovery system that can effectively separate and recover only a specific fluid from a mixture containing a plurality of fluids, and a fluid recovery method using the same.

### [Background Art]

A gas insulated switchgear (GIS) is a safety device installed in high-voltage power systems such as power plants or substations. The gas insulated switchgear performs the switching of load current under normal operating conditions. In addition, the gas insulated switchgear is provided to protect the power system, by opening and closing the line even in abnormal conditions such as fault current or short-circuit current.

The gas insulated switchgear is provided with an insulating gas. The insulating gas is provided in the gas insulated switchgear and performs an insulating function, thereby improving the operational reliability of the gas insulated switchgear.

Traditional gas insulated switchgears are provided with sulfur hexafluoride (SF₆) as an insulating gas. Sulfur hexafluoride can be produced at low cost, has excellent insulation properties, has a high extinguishing ability of generated arcs, and has a fast insulation recovery rate, and thus, it is widely used as an insulating gas.

However, sulfur hexafluoride corresponds to a greenhouse gas that causes global warming. Recently, as interest in and regulations on environmental protection have increased, a consensus has been formed on reducing greenhouse gases, especially in developed countries, and research is being conducted to develop an insulating gas that can replace sulfur hexafluoride.

For example, NOVEC 1230 (C₆F₁₂O) developed by 3M has been developed and is being used to replace sulfur hexafluoride. However, the insulating gases developed to date require excessive costs to secure insulating performance equivalent to that of sulfur hexafluoride.

Meanwhile, the insulating gas also has the character of a consumer product. In other words, as the use of a gas insulated switchgear continues, the insulating gas must be periodically replaced and recharged. Accordingly, expensive insulating gas must be continuously supplied to the gas insulated switchgear, which places a great burden on the operator of the power system and the consumers receiving power.

Accordingly, technologies for recovering and reusing previously used insulating gas have been introduced.

Korean Registered Patent No 10-1086311 discloses a gas filter device for a sulfur hexafluoride gas insulated switchgear. Specifically, it discloses a gas filter device having a structure that is capable of removing dust included in recovered sulfur hexafluoride gas and then reintroducing the same.

However, the gas filter device of the sulfur hexafluoride gas insulated switchgear disclosed in the above related art document presupposes that sulfur hexafluoride is still used as an insulating gas. In other words, the above related art document does not present a plan for a material to be utilized as an insulating gas in place of sulfur hexafluoride.

PCT Publication No. 2015-102229 discloses a treatment method for sulfur hexafluoride using radiation and a by-product recovery and treatment device. Specifically, it discloses a processing method and processing device for decomposing and recovering sulfur hexafluoride and hydrogen into hydrogen fluoride and sulfur by irradiating a mixed gas of sulfur hexafluoride and hydrogen with radiation.

However, the processing method and processing device disclosed in the above related art document only disclose a method for removing sulfur hexafluoride on the premise that it is used as an insulating gas. In other words, the related art document does not present a method for recovering an insulating gas composed of materials other than sulfur hexafluoride.
Korean Registered Patent No. 10-1086311 (November 23, 2011)
PCT Publication No. 2015-102229 (July 9, 2015)

### [Disclosure]

### [Technical Problem]

The present invention has been devised to solve the above problems, and an object of the present invention is to provide a fluid recovery system that can efficiently separate a fluid to be recovered from a mixed fluid and a fluid recovery method using the same.

Another object of the present invention is to provide a fluid recovery system in which the fluid to be recovered can undergo a separation process for multiple times and a fluid recovery method using the same.

Still another object of the present invention is to provide a fluid recovery system that can improve the separation efficiency of the fluid to be recovered, and a fluid recovery method using the same.

Still another object of the present invention is to provide a fluid recovery system that can efficiently collect and recover fluid to be recovered, and a fluid recovery method using the same.

Still another object of the present invention is to provide a fluid recovery system in which the remaining fluid to be recovered can undergo a separation process again, and a fluid recovery method using the same.

The problems of the present invention are not limited to the problems mentioned above, and other problems that are not mentioned will be clearly understood by those skilled in the art from the description below.

### [Technical Solution]

According to an aspect of the present invention, provided is a fluid recovery system, including a communication unit which communicates with the outside and introduces a mixed fluid; and a fluid separation unit which is configured to communicate with the communication unit and separate the introduced mixed fluid into at least two different fluids, wherein the fluid separation unit includes a filter member which is configured to communicate with the communication unit, receive the introduced mixed fluid, and separate the received mixed fluid into the at least two different fluids; and a collecting member which is configured to communicate with the filter member and collect a part of any one fluid of the separated fluids, wherein the communication unit includes a collecting communication unit which is configured to communicate with the outside and discharge the part of the any one fluid of the separated fluids; and an exhaust communication unit which is configured to communicate with the outside and discharge the other fluids from among the separated fluids, wherein the part of the any one fluid and the other fluids may be in different phases.

In this case, a plurality of filter members may be provided, and the plurality of filter members may be configured to communicate with each other, and the introduced mixed fluid may pass through at least any one of the plurality of filter members and may be configured to be separated into at least two different fluids.

In addition, the filter member may include a first filter member which communicates with the communication unit, and into which the mixed fluid is introduced; a second filter member which communicates with the first filter member and is located on the downstream side of the first filter member; and a third filter member which communicates with the second filter member and is located on the downstream side of the second filter member.

In this case, the fluid separation unit may include a branch flow path which is coupled to each of the first filter member, the second filter member and the third filter member, and communicates the first filter member, the second filter member and the third filter member with each other; and a branch valve which is provided in the branch flow path and is configured to allow or block the communication of at least any two of the first filter member, the second filter member and the third filter member.

In addition, a plurality of branch flow paths may be provided, and each of the plurality of branch flow paths may be configured to communicate a different pair of filter members among the first filter member, the second filter member and the third filter member with the communication unit, and a plurality of branch valves may be provided, and the plurality of branch valves may be respectively positioned in the plurality of branch flow paths, and may be configured to open or close at least any one branch flow path among the plurality of branch flow paths.

In this case, the filter member may be formed to extend in one direction and is provided with a membrane filter including a plurality of hollow fibers, the any one fluid may flow in the one direction, be separated from the mixed fluid, pass through the filter member, and flow into the collecting communication unit, and the other fluids may flow in the other direction, pass through the hollow fiber, be separated from the mixed fluid, and flow into the exhaust communication unit.

In addition, the other fluids may be composed of a mixture of different fluids, a plurality of filter members may be provided, and the shape of the hollow fibers provided by each of the plurality of filter members may be formed to be different from each other, and the plurality of filter members may be configured to filter different fluids among the plurality of fluids mixed with the other fluids.

In this case, the area of a membrane provided in the membrane filter may be determined in proportion to the flow rate of the introduced mixed fluid.

The fluid recovery system may further include a condition control unit which is connected to the fluid separation unit and is configured to heat or cool the filter member or the collecting member.

In this case, the condition control unit may include a heating member which is connected to the filter member and is configured to heat the filter member; and a cooling member which is connected to the collecting member and is configured to cool the collecting member.

In addition, the fluid recovery system may further include a flow path unit which is respectively coupled to the communication unit and the fluid separation unit, and communicates the communication unit and the fluid separation unit, wherein the flow path unit includes a collecting flow path unit which is respectively coupled to the filter member and the collecting member, and through which part of the any one fluid that has passed through the filter member flows by communicating the filter member and the collecting member.

In this case, the flow path unit may include a flow path heat-dissipation member which is provided in the collecting flow path unit and is configured to cool the any one fluid flowing therethrough.

In addition, the communication unit may include an inlet communication unit which communicates with the outside to receive the mixed fluid; and an outlet communication unit which communicates with the outside to transfer the remainder of the any one fluid, wherein the fluid recovery system further includes a fluid recovery unit which is respectively connected to the inlet communication unit and the outlet communication unit, and transfers the remainder of the any one fluid to the inlet communication unit.

In addition, according to an aspect of the present invention, provided is a method for recovering a fluid, including the steps of (a) receiving a mixed fluid by a fluid separation unit; (b) separating the received mixed fluid into at least two different fluids by the fluid separation unit; (c) collecting a part of any one fluid of the separated at least two different fluids; and d) discharging the remainder of any one fluid of the separated at least two different fluids and the other fluids.

In this case, step (a) may include step (a1) in which the mixed fluid is introduced into the inlet communication unit; step (a2) in which a pressure control member controls the pressure of the introduced mixed fluid; and step (a3) in which the introduced mixed fluid flows toward a filter member that communicates with the inlet communication unit.

In addition, step (b) may include (b1) introducing the mixed fluid into a filter member; (b2) separating the any one fluid of the mixed fluid while passing through the filter member along the extension direction of the filter member; and (b3) separating the other fluids among the mixed fluid while passing through a membrane provided in the filter member along the other direction of the filter member.

In this case, step (c) may include step (c1) in which the any one fluid of the fluids separated from the mixed fluid is introduced into a collecting member; step (c2) in which a part of the any one fluid is liquefied and collected in the collecting member; and step (c3) in which the part of the collected any one fluid flows in a collecting flow path unit, and is discharged to the outside through a collecting communication unit.

In addition, step (d) may include step (d1) in which the other fluids that have been separated from the mixed fluid flows in an exhaust flow path unit, and is discharged to the outside through an exhaust communication unit; and step (d2) in which the remainder of any one fluid flows in a discharge flow path unit, and is discharged to the outside through a discharge communication unit.

In addition, the fluid recovery method may further include, after step (d), (e) transferring the remainder of the any one fluid back to the fluid separation unit through a fluid recovery unit, wherein step (e) includes step (e1) in which the remainder of the any one fluid is introduced into a recovery flow path unit through a discharge communication unit; step (e2) in which a recovery compressor controls the pressure of the remainder of the introduced any one fluid; and step (e3) in which the remainder of the introduced any one fluid is transferred to the fluid separation unit.

### [Advantageous Effects]

According to the above configuration, the fluid recovery system according to an exemplary embodiment of the present invention and the fluid recovery method using the same can efficiently separate a fluid to be recovered from a mixed fluid.

The fluid recovery system is provided with an inlet communication unit which communicates with the outside. The inlet communication unit communicates with a fluid separation unit through an inlet flow path unit. The introduced mixed fluid may be transferred to a fluid separation unit.

The fluid separation unit includes a filter member. In an exemplary embodiment, the filter member may include a membrane to separate the mixed fluid into at least two different fluids. The fluid to be recovered flows along the longitudinal direction of the filter member and can be discharged or recovered. Except for the fluid to be recovered, the remaining fluids may be discharged while passing through a membrane in another direction of the filter member, for example, in the radial direction.

In addition, according to the above configuration, the fluid recovery system according to an exemplary embodiment of the present invention and the fluid recovery method using the same may allow the fluid to be recovered to undergo a separation process for multiple times.

In an exemplary embodiment, a plurality of filter members may be provided. The plurality of filter members are coupled and communicated with each other, and thus, the mixed fluid transferred to the fluid separation unit may pass through at least one filter member and undergo a separation process.

The plurality of filter members are respectively coupled to and communicate with a plurality of branch flow paths. A plurality of branch valves are provided on each of the plurality of branch flow paths, and the plurality of branch flow paths are controlled to open or close independently of each other.

In this case, the plurality of branch valves are controlled to correspond to each other such that different flow paths through which the mixed fluid can flow may be formed. In any case, the mixed fluid passes through the filter member at least once and undergoes a separation process.

In addition, according to the above configuration, the fluid recovery system according to an exemplary embodiment of the present invention and the fluid recovery method using the same can improve the separation efficiency of the fluid to be recovered.

In an exemplary embodiment, the filter member is connected to a heating member. The heating member is configured to heat the filter member and the mixed fluid flowing therein. Accordingly, the mixed fluid is maintained in a gas phase, and the separation efficiency can be improved.

In addition, according to the above configuration, the fluid recovery system according to an exemplary embodiment of the present invention and the fluid recovery method using the same can efficiently collect and recover the fluid to be recovered.

The fluid to be recovered that has passed through the filter member flows to the collecting member. The collecting member is configured to phase change and collect the fluid to be recovered. Accordingly, the fluid to be recovered is collected by changing its phase into a liquid phase that is relatively easy to collect and recover.

In an exemplary embodiment, a cooling member is connected to the collecting member. The cooling member is configured to cool the collecting member and the fluid to be recovered flowing into the collecting member. Accordingly, the fluid to be recovered can be phase changed and maintained in a liquid phase, thereby improving collection and recovery efficiency.

In addition, according to the above configuration, the fluid recovery system according to an exemplary embodiment of the present invention and the fluid recovery method using the same allow the remaining fluids to be recovered to undergo a separation process again.

In an exemplary embodiment, a fluid recovery unit may be provided. The fluid recovery unit is coupled to and communicates with the inlet communication unit and the outlet communication unit, respectively. The remaining fluids that have not yet changed phase or been collected in the collecting member may be transferred back to the fluid separation unit through the fluid recovery unit and undergo a separation process again.

Accordingly, even when the fluid to be recovered is not completely separated from the mixed fluid, the separation process can be repeated, and the efficiency of separation and recovery of the fluid to be recovered can be improved.

The effects of the present invention are not limited to the effects described above, and should be understood to include all effects that can be inferred from the configuration of the invention described in the detailed description or claims of the present invention.

### [Description of Drawings]

FIG. 1 is a block diagram illustrating the configuration of a fluid recovery system according to an exemplary embodiment of the present invention.
FIG. 2 is a process diagram illustrating the flow of the fluid recovery system according to the exemplary embodiment of FIG. 1.
FIG. 3 is a block diagram illustrating the configuration of a fluid recovery system according to another exemplary embodiment of the present invention (connections 110, 120).
FIG. 4 is a process diagram illustrating the flow of the fluid recovery system according to the exemplary embodiment of FIG. 3.
FIG. 5 is a flowchart illustrating the flow of a fluid recovery method according to an exemplary embodiment of the present invention.
FIG. 6 is a flowchart illustrating a specific flow of step S 100 of the fluid recovery method according to the exemplary embodiment of FIG. 5.
FIG. 7 is a flowchart illustrating a specific flow of step S200 of the fluid recovery method according to the exemplary embodiment of FIG. 5.
FIG. 8 is a flowchart illustrating a specific flow of step S300 of the fluid recovery method according to the exemplary embodiment of FIG. 5.
FIG. 9 is a flowchart illustrating a specific flow of step S400 of the fluid recovery method according to the exemplary embodiment of FIG. 5.
FIG. 10 is a flowchart illustrating the flow of a fluid recovery method according to another exemplary embodiment of the present invention.
FIG. 11 is a flowchart illustrating a specific flow of step S500 of the fluid recovery method according to the exemplary embodiment of FIG. 10.

### [Modes of the Invention]

Hereinafter, with reference to the attached drawings, the exemplary embodiments of the present invention will be described in detail so that those skilled in the art can easily practice the present invention. The present invention may be implemented in many different forms and is not limited to the exemplary embodiments described herein. In order to clearly explain the present invention, parts that are not related to the description have been omitted in the drawings, and the same or similar components are assigned the same reference numerals throughout the specification.

The words and terms used in the present specification and claims are not to be construed as limited in their usual or dictionary meanings, but according to the principle that the inventor can define terms and concepts in order to explain his or her invention in the best way, they must be interpreted with meaning and concepts consistent with technical ideas.

Therefore, the exemplary embodiments described in the present specification and the configuration illustrated in the drawings correspond to a preferred exemplary embodiment of the present invention, and do not represent the entire technical idea of the present invention, and thus, the corresponding configuration may have various equivalents and variations that may replace the same at the time of filing of the present invention.

In the following description, in order to clarify the characteristics of the present invention, the descriptions of some components may be omitted.

### 1. Definition of terms

The term "communication" used in the following description means that one or more members are connected to each other in fluid communication. In an exemplary embodiment, the communication channel may be formed by a member such as a conduit, pipe or piping.

The term "electrical conduction" used in the following description means that one or more members are connected to each other to transmit current or electrical signals. In an exemplary embodiment, electrical conduction may be formed in a wired form using a conductor member, or in a wireless form such as Bluetooth, Wi-Fi or RFID.

The term "fluid" used in the following description refers to a substance in any state whose shape can be changed by external pressure or temperature. In an exemplary embodiment, the fluid may be in the form of liquid or gas.

The term "mixed fluid" described below refers to any one fluid that is supplied to the fluid recovery systems 10, 20 and subjected to a separation process. In an exemplary embodiment, the mixed fluid may be composed of a fluid discharged from an external device, such as a gas insulated switchgear.

The term "any one fluid" used in the following description refers to the fluid that is subject to collection and recovery. In an exemplary embodiment where the mixed fluid is provided as a fluid discharged from a gas insulated switchgear, any one fluid may refer to an insulating gas. In the above exemplary embodiment, any one fluid may be C₄F₇N or C₅F₁₀O.

The term "other fluids" used in the following description refer to fluids other than the any one fluid subject to collection and recovery. In an exemplary embodiment where the mixed fluid is provided as a fluid discharged from a gas insulated switchgear, the other fluids may refer to fluids other than the insulating gas, such as oxygen or hydrogen.

### 2. Description of the configuration of the fluid recovery systems 10, 20 according to an exemplary embodiment of the present invention

The fluid recovery systems 10, 20 according to an exemplary embodiment of the present invention may receive a mixed fluid from an external device and separate the same into a plurality of fluids. The plurality of separated fluids may be discharged to the outside through different paths.

Therefore, any one fluid mixed in the mixed fluid may be separated from the other fluids and supplied again to the external device. Accordingly, the recovery efficiency of any one fluid mixed in the mixed fluid can be increased, and the amount of any one fluid that must be newly provided to be supplied to an external device can be reduced.

Accordingly, the financial cost required to operate the external device can be reduced. Additionally, as the recovery efficiency of any one fluid is improved, the amount of any one newly provided fluid is also reduced, thereby preventing environmental pollution.

### (1) Description of the configuration of the fluid recovery system 10 according to an exemplary embodiment of the present invention

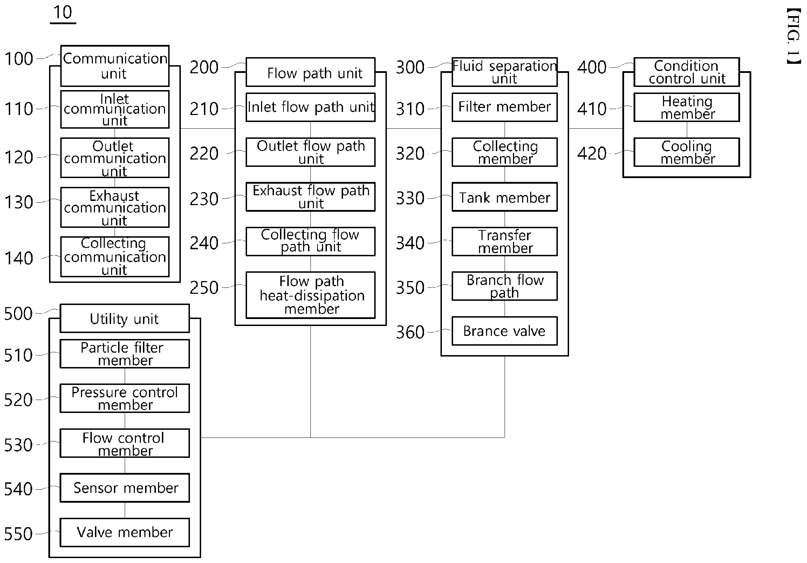

Referring to FIGS. 1 to 2, the configuration of a fluid recovery system 10 according to an exemplary embodiment of the present invention is illustrated. Each component of the fluid recovery system 10 described below is in communication with each other such that any one fluid can flow therein.

Additionally, power and control signals required to operate each component of the fluid recovery system 10 may be transmitted from an external power source (not illustrated) or a control module (not illustrated). Each component of the fluid recovery system 10 is connected to an external power source (not illustrated) and a control module (not illustrated).

In the illustrated exemplary embodiment, the fluid recovery system 10 includes a communication unit 100, a flow path unit 200, a fluid separation unit 300, a condition control unit 400, and a utility unit 500.

The communication unit 100 is a component through which the fluid recovery system 10 communicates with the outside. The mixed fluid collected from the external device may be supplied to the fluid recovery system 10 through the communication unit 100. Additionally, various fluids that pass through the fluid recovery system 10 and are separated from the mixed fluid may be discharged or recovered to the outside through the communication unit 100.

The communication unit 100 is coupled to and communicates with the flow path unit 200. The communication unit 100 may be combined with and communicate with other components through the flow path unit 200. In the illustrated exemplary embodiment, the communication unit 100 is coupled to and communicates with the fluid separation unit 300 by the flow path unit 200.

A plurality of communication units 100 may be provided. A mixed fluid may be transferred from the outside to at least any one of the plurality of communication units 100. In the remaining of the plurality of communication units 100, each fluid separated from the mixed fluid may be discharged to the outside and collected.

In the illustrated exemplary embodiment, the communication unit 100 includes an inlet communication unit 110, an outlet communication unit 120, an exhaust communication unit 130 and a collecting communication unit 140.

The inlet communication unit 110 is a passage through which the mixed fluid recovered from an external device flows. The inlet communication unit 110 communicates with the flow path unit 200 and the fluid separation unit 300 to the outside.

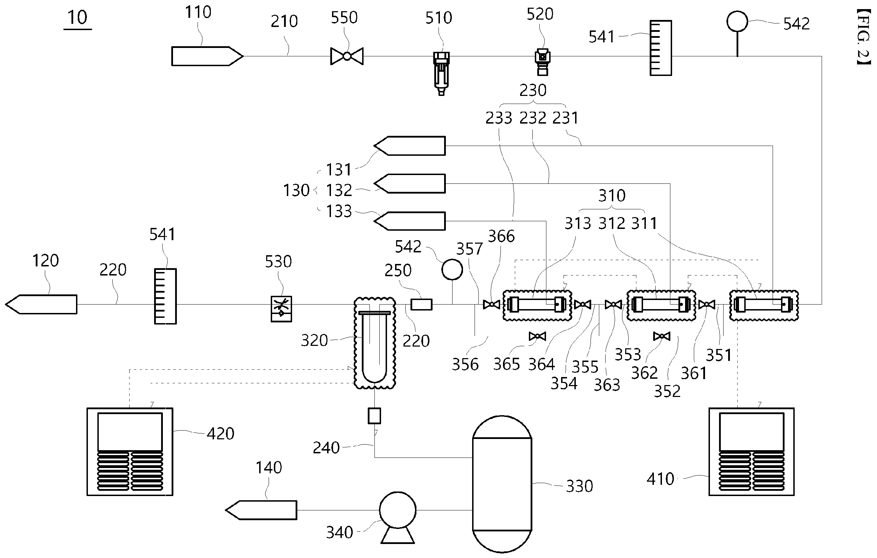

The inlet communication unit 110 may be provided to be open and closed. That is, the outer left part of the inlet communication unit 110 in the exemplary embodiment illustrated in FIG. 2 can be opened only when the mixed fluid flows in. In other words, the left part of the inlet communication 110 may be closed while the fluid recovery system 10 is operating.

The inlet communication unit 110 is coupled to and communicates with the flow path unit 200. Specifically, the inlet communication unit 110 is coupled to and communicates with an inlet flow path unit 210. The mixed fluid flowing in through the inlet communication unit 110 may flow into the fluid separation unit 300 through the inlet flow path unit 210.

The outlet communication unit 120 is a passage through which any remaining fluid is discharged and recovered to the outside after passing through the fluid separation unit 300. That is, the outlet communication unit 120 functions as a passage for the remainder of any remaining fluid that has not yet been separated from the mixed fluid to be discharged and recovered to the outside. The outlet communication unit 120 communicates with the flow path unit 200 and the fluid separation unit 300 to the outside.

The outlet communication unit 120 may be provided to be open and closed. That is, the outer side of the outlet communication unit 120, which is the left part in the illustrated exemplary embodiment, may be opened only when the remainder of any one fluid is discharged after the separation process of the mixed fluid is performed. In other words, the left part of the outlet communication 120 can be closed while the fluid recovery system 10 is operating.

The outlet communication unit 120 is coupled to and communicates with the flow path unit 200. Specifically, the outlet communication unit 120 is coupled to and communicates with an outlet flow path unit 220. Through the outlet communication unit 120, the remaining fluid that has undergone the separation process (i.e., the remainder of any one fluid) may be discharged to the outside through the outlet flow path unit 220.

The exhaust communication unit 130 is a passage through which the fluid that is not subject to recovery among the mixed fluid, that is, the other fluid, is discharged to the outside. The exhaust communication unit 130 communicates with the flow path unit 200 and the fluid separation unit 300 to the outside.

The exhaust communication unit 130 may be provided to be open and closed. That is, the outer side of the exhaust communication unit 130, which is the left part in the illustrated exemplary embodiment, may be opened only when the other fluids that have been separated from the fluid separation unit 300 are discharged. In other words, the exhaust communication unit 130 may be opened only while the fluid recovery system 10 is operating.

The exhaust communication unit 130 is coupled to and communicates with the flow path unit 200. Specifically, the exhaust communication unit 130 is coupled to and communicates with the filter member 310 of the fluid separation unit 300 through an exhaust flow path unit 230. Through the exhaust communication unit 130, the other fluids that have been separated from the mixed fluid may be discharged to the outside through the exhaust flow path unit 230.

A plurality of exhaust communication units 130 may be provided. The plurality of exhaust communication units 130 may be respectively coupled to and communicate with a plurality of filter members 310 through a plurality of exhaust flow path units 230. In the illustrated exemplary embodiment, three exhaust communication units 130 are provided, including a first exhaust communication unit 131, a second exhaust communication unit 132 and a third exhaust communication unit 133.

The first exhaust communication unit 131 is coupled to and communicates with a first exhaust flow path unit 231 so as to communicate with a first filter member 311. The second exhaust communication unit 132 is coupled to and communicates with a second exhaust flow path unit 232 so as to communicate with a second filter member 312. The third exhaust communication unit 133 is coupled to and communicates with a third exhaust flow path unit 233 so as to communicate with a third filter member 313.

The collecting communication unit 140 is a passage through which any one fluid to be recovered among the mixed fluid undergoes a phase change and is discharged to the outside. The collecting communication unit 140 communicates with the flow path unit 200 and the fluid separation unit 300 to the outside.

The collecting communication unit 140 may be provided to be open and closed. That is, the outer side of the collecting communication unit 140, which is the left part in the illustrated exemplary embodiment, may be opened only when any one fluid separated from the fluid separation unit 300 undergoes a phase change and is discharged. In other words, the collecting communication unit 140 may be opened only while the fluid recovery system 10 is operating.

The collecting communication unit 140 is coupled to and communicates with the flow path unit 200. Specifically, the collecting communication unit 140 is coupled to and communicates with a collecting flow path unit 240. Any one fluid that is collected and phase-changed while passing through a filter member 310, a collecting member 320, a tank member 330 and a transfer member 340 of the fluid separation unit 300 through the collecting communication unit 140 may be discharged to the outside through the collecting flow path unit 240.

Each component of the communication unit 100 communicates with the fluid separation unit 300 through the flow path unit 200.

The flow path unit 200 connects each component of the fluid recovery system 10 to enable fluid communication. The flow path unit 200 is respectively coupled to each component of the fluid recovery system 10.

The flow path unit 200 may be formed of a material that is not damaged by the mixed fluid, any one fluid separated from the mixed fluid or other fluids, or does not have a physical or chemical effect on these fluids. In an exemplary embodiment, the flow path unit 200 may be formed of stainless steel (SUS).

A utility unit 500 may be provided on the flow path unit 200. The utility unit 500 may detect the physical properties of a mixed fluid, a separated any one fluid or the other fluids flowing in the flow path unit 200 and control the flow of each fluid. That is, the flow path unit 200 may be controlled by the utility unit 500 to allow or block communication between each component of the fluid recovery system 10.

A plurality of flow path units 200 may be provided. The plurality of flow path units 200 may be respectively combined with different components provided in the fluid recovery system 10 to communicate with the different components.

In the illustrated exemplary embodiment, the flow path unit 200 includes an inlet flow path unit 210, an outlet flow path unit 220, an exhaust flow path unit 230, a collecting flow path unit 240 and a flow path heat-dissipation member 250.

The inlet flow path unit 210 communicates with the inlet communication unit 110 of the communication unit 100 and the filter member 310 of the fluid separation unit 300. The inlet flow path unit 210 extends between the inlet communication unit 110 and the filter member 310, and each end in the extension direction thereof is coupled to and communicates with the inlet communication unit 110 and the filter member 310, respectively.

The mixed fluid flowing in through the inlet communication unit 110 flows inside the inlet flow path unit 210. The mixed fluid may flow along the inlet flow path unit 210 and be guided to the filter member 310.

The utility unit 500 may be provided on the inlet flow path unit 210. The utility unit 500 may process the mixed fluid flowing inside the inlet flow path unit 210 and detect information about the flow of the mixed fluid.

In the exemplary embodiment illustrated in FIG. 2, a particle filter member 510, a pressure control member 520, a sensor member 540 and a valve member 550 are provided on the inlet flow path unit 210.

In the illustrated exemplary embodiment, the inlet flow path unit 210 is coupled to and communicates with the first filter member 311 located at the most upstream side among the filter members 310. The inlet flow path unit 210 may be coupled to and communicate with any one of a plurality of filter members 310.

The outlet flow path unit 220 communicates with the outlet communication unit 120 of the communication unit 100 and the collecting member 320 of the fluid separation unit 300. The outlet flow path unit 220 extends between the outlet communication unit 120 and the collecting member 320, and each end in the extension direction thereof is coupled to and communicates with the outlet communication unit 120 and the collecting member 320, respectively.

Any one fluid remaining after passing through the filter member 310 and the collecting member 320 of the fluid separation unit 300 flows inside the outlet flow path unit 220. Any one fluid flows along the outlet flow path unit 220, is discharged to the outside through the outlet communication unit 120, and is recovered.

The utility unit 500 may be provided on the outlet flow path unit 220. The utility unit 500 may process any one fluid flowing inside the outlet flow path unit 220 (i.e., remaining without being separated) and detect information about the flow of any one fluid.

In the exemplary embodiment illustrated in FIG. 2, a flow rate control member 530 and a sensor member 540 are provided on the outlet flow path unit 220.

The exhaust flow path unit 230 communicates with the exhaust communication unit 130 of the communication unit 100 and the filter member 310 of the fluid separation unit 300. The exhaust flow path unit 230 extends between the exhaust communication unit 130 and the filter member 310, and each end in the extension direction thereof is coupled to and communicates with the exhaust communication unit 130 and the filter member 310, respectively.

Inside the exhaust flow path unit 230, the introduced mixed fluid passes through the filter member 310, and other separated fluids flow. Other fluids may flow along the exhaust flow path unit 230 and be discharged to the outside through the exhaust communication unit 130. In an exemplary embodiment, the other fluids may be oxygen or hydrogen, as described above.

A plurality of exhaust flow path units 230 may be provided. The plurality of exhaust flow path units 230 may be respectively coupled to a plurality of exhaust communication units 130 and a plurality of filter members 310 and communicate with the same.

In the illustrated exemplary embodiment, there are three exhaust flow path units 230, including a first exhaust flow path unit 231, a second exhaust flow path unit 232 and a third exhaust flow path unit 233.

The first exhaust flow path unit 231 is coupled to and communicates with the first exhaust communication unit 131 and the first filter member 311, respectively. The second exhaust flow path unit 232 is coupled to and communicates with the second exhaust communication unit 132 and the second filter member 312, respectively. The third exhaust flow path unit 233 is coupled to and communicates with the third exhaust communication unit 133 and the third filter member 313, respectively.

The collecting flow path unit 240 communicates with the collecting communication unit 140 of the communication unit 100 and the collecting member 320 of the fluid separation unit 300. The collecting flow path unit 240 extends between the collecting communication unit 140 and the collecting member 320, and each end in the extension direction thereof is coupled to and communicates with the collecting communication unit 140 and the collecting member 320, respectively.

The collecting flow path unit 240 is branched from the outlet flow path unit 220 through the collecting member 320. A tank member 330 is provided on the collecting flow path unit 240 to accommodate any one fluid that passes through the collecting member 320 and undergoes a phase change. The collecting flow path unit 240 communicates with the tank member 330.

A transfer member 340 is provided on the collecting flow path unit 240 to provide a transfer force to any one fluid collected in the collecting member 320 or any one fluid accommodated in the tank member 330. The collecting flow path unit 240 communicates with the transfer member 340.

Inside the collecting flow path unit 240, any one fluid that is collected by the collecting member 320 and undergoes a phase change flows. Any one fluid may flow toward the tank member 330 along the collecting flow path unit 240 and from the tank member 330 toward the collecting communication unit 140 by the transfer force provided by the transfer member 340 to be discharged or recovered to the outside.

The flow path heat-dissipation member 250 is located on the outlet flow path unit 220 and is configured to cool any one fluid flowing within the outlet flow path unit 220. As the flow path heat-dissipation member 250 cools any one fluid, the phase change process in the collecting member 320 may be efficiently performed.

In the exemplary embodiment illustrated in FIG. 2, the flow path heat-dissipation member 250 is located on the downstream side of the filter member 310 of the fluid separation unit 300 and on the upstream side of the collecting member 320. That is, the flow path heat-dissipation member 250 is configured to cool any one fluid that has passed through the filter member 310 before it flows into the collecting member 320.

The flow path heat-dissipation member 250 is provided on the outlet flow path unit 220 and may be provided in any shape that is capable of cooling any one fluid flowing therein. In an exemplary embodiment, the flow path heat-dissipation member 250 may be provided in the form of a chiller or a thermoelectric module (Peltier device).

The fluid separation unit 300 substantially performs the role of separating mixed fluids supplied from the outside. The fluid separation unit 300 is coupled to and communicates with the communication unit 100 through the flow path unit 200 and may receive a mixed fluid from the outside. The delivered mixed fluid passes through the fluid separation unit 300 and is separated into any one fluid and the other fluid, and then may be discharged and recovered to the outside through the flow path unit 200 and the communication unit 100.

The fluid separation unit 300 is coupled to and communicates with the flow path unit 200. Specifically, the fluid separation unit 300 is coupled to and communicates with the inlet flow path unit 210 such that the mixed fluid flowing in through the inlet communication unit 110 can flow into the filter member 310 of the fluid separation unit 300.

In addition, the fluid separation unit 300 is coupled to and communicates with the outlet flow path unit 220 such that any one fluid that has not yet been separated from the mixed fluid (i.e., any remaining fluid) can be discharge and recovered to the outside through the outlet communication unit 120.

Furthermore, the fluid separation unit 300 is coupled to and communicates with the exhaust flow path unit 230 such that the other fluids that have been separated from the mixed fluid can be discharged and recovered to the outside through the exhaust communication unit 130.

Meanwhile, the fluid separation unit 300 is coupled to and communicates with the collecting flow path unit 240 such that any one fluid that has been separated from the mixed fluid, phase-changed and collected can be discharged and recovered to the outside through the collecting communication unit 140.

In addition, a flow path heat-dissipation member 250 may be provided on a flow path communicating with each component of the fluid separation unit 300 (i.e., the outlet flow path unit 220 in the exemplary embodiment illustrated in FIG. 2). The flow path heat-dissipation member 250 is configured to cool any one fluid that has passed through a part of the fluid separation unit 300. Accordingly, the phase change of any one fluid may be performed more effectively.

In the illustrated exemplary embodiment, the fluid separation unit 300 includes a filter member 310, a collecting member 320, a tank member 330, a transfer member 340, a branch flow path 350 and a branch valve 360.

The filter member 310 separates the mixed fluid that flows in through the inlet communication unit 110 and flows along the inlet flow path unit 210 into any one fluid and the other fluids. The filter member 310 is coupled to and communicates with the inlet flow path unit 210.

Any one fluid that has been separated by the filter member 310 passes through the collecting member 320 through the outlet flow path unit 220, undergoes a phase change, and then flows to the tank member 330. The filter member 310 is coupled to and communicates with the outlet flow path unit 220.

The other fluids that have been separated by the filter member 310 is discharged to the outside through the exhaust flow path unit 230 and the exhaust communication unit 130. The filter member 310 is coupled to and communicates with the exhaust flow path unit 230.

The filter member 310 may be configured in any form that is capable of separating a plurality of fluids having different physical and chemical properties. In an exemplary embodiment, the filter member 310 may be provided in the form of a membrane filter including a plurality of hollow fibers.

In the above exemplary embodiment, any one of the mixed fluids flowing into the filter member 310 may flow in the longitudinal direction and be discharged from the filter member 310 without passing through a membrane. Additionally, the other fluids may flow radially through the membrane and be discharged.

In an exemplary embodiment, the hollow fibers may be manufactured from a super engineering plastic material, such as polysulfone or polyimide. In this case, the hollow fibers may be manufactured through a spinning process.

In the above exemplary embodiment, the membrane constituting the filter member 310 may be designed to have permeability as shown in Table 1 below for various fluids.

**[Table 1]**

| Oxygen (O₂) | Nitrogen (N₂) | Carbon Dioxide (CO₂) |
|---|---|---|
| 50 to 58 | 8 to 10 | 270 to 330 |

Additionally, the membrane constituting the filter member 310 may be designed to have selectivity for various fluids as shown in Table 2 below.

**[Table 2]**

| α (O₂/N₂) | α (CO₂/N₂) |
|---|---|
| 5.00 to 7.00 | 30 to 36.6 |

Additionally, in the above exemplary embodiment, the flow rate of fluid that the fluid recovery system 10 can process may be determined depending on the area of the membrane, that is, the area of the membrane including the hollow fibers. In an exemplary embodiment, the flow rate of fluid that the fluid recovery system 10 can process may be proportional to the area of the membrane.

For example, when the membrane is provided with an area of 4.0 to 5.0 m2, the mixed fluid may be supplied to the fluid recovery system 10 at a flow rate of 10 L per minute (10 L/min).

A plurality of filter members 310 may be provided. The plurality of filter members 310 are coupled to and communicate with each other such that the mixed fluid flowing in through the inlet flow path unit 210 can sequentially pass through the plurality of filter members 310. Accordingly, the mixed fluid may be separated into any one fluid and the other fluids multiple times. As a result, the separation efficiency of mixed fluids may be improved.

In the exemplary embodiment illustrated in FIG. 2, three filter members 310 are provided, including a first filter member 311, a second filter member 312 and a third filter member 313. The number of filter members 310 may be any number that can effectively separate mixed fluids.

In an exemplary embodiment where a plurality of filter members 310 are provided, a branch flow path 350 is provided between each filter member 310, and a branch valve 360 is provided on the branch flow path 350 to control the opening and closing of the branch flow path 350.

In the illustrated exemplary embodiment, the first filter member 311 is coupled to and communicates with the first branch flow path 351 and the sixth branch flow path 356, respectively. The second filter member 312 communicates with the first branch flow path 351 and the third branch flow path 353, respectively. The third filter member 313 communicates with the fourth branch flow path 354 and the seventh branch flow path 357, respectively.

Accordingly, the mixed fluid that flows through the inlet flow path unit 210 and flows into the fluid separation unit 300 may selectively pass through any one or more of the plurality of filter members 310 and be separated into any one fluid and the other fluids. The detailed description thereof will be provided below.

The first filter member 311 is coupled to and communicates with the inlet flow path unit 210. The mixed fluid flowing in through the inlet communication unit 110 may flow to the first filter member 311 through the inlet flow path unit 210. That is, the fluid recovery system 10 according to an exemplary embodiment of the present invention may be configured such that the inflow mixed fluid must pass through the first filter member 311 before being discharged.

The first filter member 311 is coupled to and communicates with the first exhaust flow path unit 231. The other fluids that have been separated from the mixed fluid while passing through the first filter member 311 may be discharged to the outside through the first exhaust flow path unit 231 and the first exhaust communication unit 131.

As described above, in an exemplary embodiment, the other fluids may flow in the radial direction of the first filter member 311. Accordingly, it will be understood that the first filter member 311 may communicate with the first exhaust flow path unit 231 in the radial direction thereof.

The first filter member 311 is coupled to and communicates with the first branch flow path 351. Any one fluid that has passed through the first filter member 311 and been separated from the mixed fluid may flow into the second filter member 312 or the sixth branch flow path 356 through the first branch flow path 351.

As described above, in an exemplary embodiment, any one fluid, that is, the remaining fluid from which the other fluids have been separated from the mixed fluid, may flow in the longitudinal direction of the first filter member 311. Accordingly, it will be understood that the first filter member 311 may communicate with the first branch flow path 351 in the longitudinal direction thereof.

Accordingly, any one fluid that has passed through the first filter member 311 may selectively flow toward the second filter member 312 or the sixth branch flow path 356. This is achieved by the first branch valve 361, which will be described below.

The second filter member 312 is coupled to and communicates with the first filter member 311 and the third filter member 313. Any one fluid that has passed through the first filter member 311 may flow into the second filter member 312. Any one introduced fluid may pass through the second filter member 312 and undergo a separation process again before being discharged.

The second filter member 312 is coupled to and communicates with the first branch flow path 351. Any one fluid that has passed through the first filter member 311 flows to the second filter member 312 through the first branch flow path 351.

The second filter member 312 is coupled to and communicates with the second exhaust flow path unit 232. The other fluids that have passed through the second filter member 312 and been further separated from any one fluid may be discharged to the outside through the second exhaust flow path unit 232 and the second exhaust communication unit 132.

As described above, in an exemplary embodiment, the other fluids may flow in the radial direction of the second filter member 312. Accordingly, it will be understood that the second filter member 312 may communicate with the second exhaust flow path unit 232 in the radial direction thereof.

The second filter member 312 is coupled to and communicates with the third branch flow path 353. Any one fluid that has passed through the second filter member 312 and undergone an additional separation process may flow into the third filter member 313 or the fifth branch flow path 355 through the third branch flow path 353.

As described above, in an exemplary embodiment, any one fluid may flow in the longitudinal direction of the second filter member 312. Accordingly, it will be understood that the second filter member 312 may communicate with the third branch flow path 353 in the longitudinal direction thereof.

Accordingly, any one fluid that has passed through the second filter member 312 may selectively flow toward the third filter member 313 or the sixth branch flow path 356. This is achieved by the third branch valve 363 and fourth branch valve 364, which will be described below.

The third filter member 313 is coupled to and communicates with the second filter member 312 and the outlet flow path unit 220. Any one fluid that has passed through the first filter member 311 or the second filter member 312 may flow into the third filter member 313. Any one introduced fluid may pass through the third filter member 313 and be discharged after undergoing a separation process again.

The third filter member 313 is coupled to and communicates with the fourth branch flow path 354. Any one fluid that has passed through the second filter member 312 may flow into the third filter member 313 through the fourth branch flow path 354.

The third filter member 313 is coupled to and communicates with the third exhaust flow path unit 233. The other fluids that have passed through the third filter member 313 and been further separated from one fluid may be discharged to the outside through the third exhaust flow path unit 233 and the third exhaust communication unit 133.

As described above, in an exemplary embodiment, the other fluids may flow in the radial direction of the third filter member 313. Accordingly, it will be understood that the third filter member 313 may communicate with the third exhaust flow path unit 233 in the radial direction thereof.

The third filter member 313 is coupled to and communicates with the seventh branch flow path 357. Any one fluid that has passed through the third filter member 313 may flow into the outlet flow path unit 220 through the seventh branch flow path 357.

As described above, in an exemplary embodiment, any one fluid may flow in the longitudinal direction of the third filter member 313. Accordingly, it will be understood that the third filter member 313 may communicate with the seventh branch flow path 357 in the longitudinal direction thereof.

Accordingly, any one fluid that has passed through the third filter member 313 is phase-changed and collected by the collecting member 320 provided on the outlet flow path unit 220, and it may be discharged and recovered to the outside by passing through the collecting communication unit 140 through the collecting flow path unit 240.

The collecting member 320 changes the phase of any one fluid that has passed through the filter member 310 and collects the same. In an exemplary embodiment, the collecting member 320 may be configured to collect any one gas-phase fluid by changing its phase to a liquid phase.

Accordingly, compared to the case where any one fluid is maintained in a gas phase, the volume of space occupied by any one fluid may be reduced. Additionally, as any one fluid changes phase into a liquid phase, it may be collected more effectively.

The collecting member 320 is coupled to and communicates with the outlet flow path unit 220. Any one fluid that has passed through the filter member 310 and been separated from the mixed fluid may flow to the collecting member 320. To this end, the collecting member 320 is coupled to and communicates with the sixth branch flow path 356 and the seventh branch flow path 357 through the outlet flow path unit 220, respectively.

Therefore, it can be said that the collecting member 320 communicates with the filter member 310 through the outlet flow path unit 220.

A flow path heat-dissipation member 250 may be provided on the outlet flow path unit 220 that communicates the collecting member 320 and the filter member 310. As described above, the flow path heat-dissipation member 250 may additionally cool any one fluid discharged from the filter member 310, thereby improving the phase change efficiency in the collecting member 320.

The collecting member 320 communicates with the outlet communication unit 120. Specifically, the collecting member 320 is coupled to and communicates with the outlet communication unit 120 through the outlet flow path unit 220. Any one fluid that has not yet phase-changed or been collected in the collecting member 320 flows along the outlet flow path unit 220, and it may be discharged and recovered through the outlet communication unit 120.

The collecting member 320 is coupled to and communicates with the collecting flow path unit 240. Any one fluid that has been phase-changed and collected in the collecting member 320 may flow to the tank member 330 through the collecting flow path unit 240.

The collecting member 320 may be provided in any form that can phase change and collect any one separated fluid. In an exemplary embodiment, the collecting member 320 may be configured to phase change and collect any one introduced fluid by adjusting the pressure or temperature.

The tank member 330 receives and stores any one fluid that has been phase-changed and collected by the collecting member 320. The tank member 330 is coupled to and communicates with the collecting member 320.

The tank member 330 is coupled to and communicates with the collecting flow path unit 240. The tank member 330 is located on the midstream side of the collecting flow path unit 240, so as to be respectively coupled to and communicate with the collecting member 320 that is located on the upstream side of the collecting flow path unit 240 and the transfer member 340 that is located on the downstream side of the collecting flow path unit 240.

That is, the tank member 330 communicates with the collecting member 320 and the transfer member 340 through the collecting flow path unit 240, respectively.

The tank member 330 may be provided in any form in which a space is formed therein and can receive and store any one fluid that has been phase-changed and collected by the collecting member 320.

The tank member 330 communicates with the transfer member 340. Any one fluid contained in the tank member 330 may be discharged from the tank member 330 by the transfer force provided by the transfer member 340.

The transfer member 340 provides a transfer force to the collecting flow path unit 240 and any one fluid remaining inside the collecting member 320 and the tank member 330 that are coupled to the collecting flow path unit 240. Any one fluid may be discharged and recovered to the outside through the collecting communication unit 140 via the collecting member 320 and the tank member 330 by the transfer force provided by the transfer member 340.

The transfer member 340 is coupled to and communicates with the collecting flow path unit 240. The transfer force provided by the transfer member 340 may be transferred to the interior of the collecting flow path unit 240 and to the interior of any configuration coupled to the collecting flow path unit 240.

The transfer member 340 may be provided in any form that is capable of generating a transfer force for flowing a fluid. In an exemplary embodiment, the transfer member 340 may be provided in the form of a compressor or pump.

In the illustrated exemplary embodiment, the transfer member 340 is located on the downstream side of the collecting flow path unit 240. That is, the collecting member 320, the tank member 330 and the transfer member 340 are disposed along the flow path of any one fluid. The transfer member 340 may be placed in any position that can provide a transfer force to any one fluid.

The branch flow path 350 is coupled to and communicates with a plurality of filter members 310, respectively, to communicate with the plurality of filter members 310. In addition, the branch flow path 350 is coupled to and communicates with the inlet flow path unit 210 and the outlet flow path unit 220, respectively, to form a path through which the mixed fluid flows and a path through which any one fluid that has been separated from the mixed fluid flows.

In the illustrated exemplary embodiment, three filter members 310 are provided, including a first filter member 311, a second filter member 312 and a third filter member 313. Accordingly, a plurality of branch flow paths 350 are also provided so as to be respectively coupled to and communicate with the inlet flow path unit 210, the outlet flow path unit 220, the first filter member 311, the second filter member 312 and the third filter member 313.

In an exemplary embodiment where a plurality of branch flow paths 350 are provided, the plurality of branch flow paths 350 may be opened or closed independently of each other. Accordingly, communication of the plurality of filter members 310 with other filter members 310, the inlet flow path unit 210 or the outlet flow path unit 220 may be controlled independently of each other. This is achieved by a branch valve 360, which will be described below.

In the illustrated exemplary embodiment, the branch flow paths 350 include a first branch flow path 351, a second branch flow path 352, a third branch flow path 353, a fourth branch flow path 354, a fifth branch flow path 355, and a sixth branch flow path 356 and a seventh branch flow path 357.

The first branch flow path 351 forms a path through which any one fluid that has passed through the first filter member 311 flows. The first branch flow path 351 is coupled to and communicates with the first filter member 311 and the second filter member 312, respectively. In the illustrated exemplary embodiment, the upstream side of the first branch flow path 351 is coupled to and communicates with the downstream side of the first filter member 311, and the downstream side of the first branch flow path 351 is coupled to and communicates with the upstream side of the second filter member 312, respectively.

The first branch flow path 351 communicates with the second branch flow path 352. Specifically, the second branch flow path 352 is branched from the first branch flow path 351 to form another path through which any one fluid flows.

In the exemplary embodiment illustrated in FIG. 2, the second branch flow path 352 is branched on the upstream side of the first branch valve 361 (i.e., the right side in the illustrated exemplary embodiment), between the first filter member 311 and the second filter member 312 among the parts where the first branch flow path 351 extends.

A first branch valve 361 is located on the first branch flow path 351. The first branch valve 361 allows or blocks communication between the first branch flow path 351 and the second filter member 312. That is, the first branch flow path 351 is provided to be open and closed by the first branch valve 361.

When the first branch valve 361 closes the first branch flow path 351, any one fluid that has been discharged from the first filter member 311 may flow along the second branch flow path 352 rather than the second filter member 312.

Accordingly, any one fluid that has passed through the first filter member 311 may flow in any one of the second filter member 312 and the second branch flow path 352.

The second branch flow path 352 forms another path through which any one fluid that has passed through the first filter member 311 flows. The second branch flow path 352 communicates with the first branch flow path 351 that communicates with the first filter member 311 such that any one fluid that has passed through the first filter member 311 can flow in.

Therefore, it can be said that the second branch flow path 352 functions as a by-pass flow path with respect to the first branch flow path 351.

The second branch flow path 352 communicates with the fifth branch flow path 355. Any one fluid flowing along the second branch flow path 352 may sequentially pass through the fifth branch flow path 355 and the fourth branch flow path 354 and flow into the third filter member 313.

The second branch flow path 352 communicates with the sixth branch flow path 356. Any one fluid flowing along the second branch flow path 352 may pass through the sixth branch flow path 356 and then flow into the outlet flow path unit 220.

In the exemplary embodiment illustrated in FIG. 2, the upstream end of the second branch flow path 352 communicates with the first branch flow path 351. Additionally, the midstream part of the second branch flow path 352 communicates with the fifth branch flow path 355, and the downstream end of the second branch flow path 352 communicates with the outlet flow path unit 220.

In this case, the upstream end of the second branch flow path 352 may be located between the first filter member 311 and the first branch valve 361. The midstream part of the second branch flow path 352 may be located between the second branch valve 362 and the fifth branch valve 365. The downstream end of the second branch flow path 352 may be located between the third filter member 313 and the collecting member 320.

Accordingly, the first branch valve 361, the second branch valve 362 and the fifth branch valve 365 are each controlled so as to allow or block communication between the second branch flow path 352 and the other branch flow paths 351, 355, 356.

That is, any one fluid flowing into the second branch flow path 352 may flow in any one of the fifth branch flow path 355 or the sixth branch flow path 356.

The third branch flow path 353 forms a path through which any one fluid that has passed through the second filter member 312 flows. The third branch flow path 353 is coupled to and communicates with the second filter member 312. In the illustrated exemplary embodiment, the upstream side of the third branch flow path 353 is coupled to and communicates with the downstream side of the second filter member 312.

The third branch flow path 353 is coupled to and communicates with the fourth branch flow path 354. Any one fluid that has passed through the third branch flow path 353 may flow into the fourth branch flow path 354. In the illustrated exemplary embodiment, the downstream end of the third branch flow path 353 is coupled to and communicates with the upstream end of the fourth branch flow path 354.

The third branch flow path 353 is coupled to and communicates with the fifth branch flow path 355. Any one fluid that has passed through the third branch flow path 353 may flow into the fifth branch flow path 355. In the illustrated exemplary embodiment, the downstream end of the third branch flow path 353, that is, the part coupled to and communicating with the upstream end of the fourth branch flow path 354 is coupled to and communicates with the upper end of the fifth branch flow path 355.

Accordingly, any one fluid that has passed through the second filter member 312 may pass through the third branch flow path 353 and then flow in any one of the fourth branch flow path 354 and the fifth branch flow path 355.

A third branch valve 363 is disposed on the third branch flow path 353. The third branch valve 363 may open or close the third branch flow path 353 so as to allow or block communication between the third branch flow path 353 and the second filter member 312.

The fourth branch flow path 354 forms a path through which any one fluid that has passed through the second filter member 312 flows. In addition, the fourth branch flow path 354 forms a path through which any one fluid that has sequentially passed through the first filter member 311, the first branch flow path 351, the second branch flow path 352 and the fifth branch flow path 355 flows.

That is, any one fluid that has passed through the first filter member 311 and then selectively passed through the second filter member 312 may flow in the fourth branch flow path 354.

The fourth branch flow path 354 is coupled to and communicates with the third branch flow path 353. Any one fluid that has passed through the third branch flow path 353 may flow into the fourth branch flow path 354. In the illustrated exemplary embodiment, the upstream end of the fourth branch flow path 354 is coupled to and communicates with the downstream end of the third branch flow path 353.

The fourth branch flow path 354 is coupled to and communicates with the third filter member 313. Any one fluid that has passed through the fourth branch flow path 354 may flow to the third filter member 313. In the illustrated exemplary embodiment, the downstream end of the fourth branch flow path 354 is coupled to and communicates with the upstream end of the third filter member 313.

The fourth branch flow path 354 is coupled to and communicates with the fifth branch flow path 355. Any one fluid that has sequentially passed through the first filter member 311, the second branch flow path 352 and the fifth branch flow path 355 may flow into the fourth branch flow path 354. In the illustrated exemplary embodiment, the upstream end of the fourth branch flow path 354, that is, the part coupled to and communicating with the downstream end of the third branch flow path 353 is coupled to and communicates with the upper end of the fifth branch flow path 355.

Accordingly, any one fluid that has passed through the fourth branch flow path 354 may pass through the third filter member 313 and then flow into the outlet flow path unit 220 through the seventh branch flow path 357.

A fourth branch valve 364 is disposed on the fourth branch flow path 354. The fourth branch valve 364 may open or close the fourth branch flow path 354 so as to allow or block communication between the fourth branch flow path 354 and the third filter member 313.

The fifth branch flow path 355 forms a path through which any one fluid that has passed through the first filter member 311 flows. The fifth branch flow path 355 is coupled to and communicates with the second branch flow path 352.

In the illustrated exemplary embodiment, the lower end of the fifth branch flow path 355 is coupled to and communicates with the downstream end of the second branch flow path 352 and the upstream end of the sixth branch flow path 356, respectively. In this case, the lower end of the fifth branch flow path 355 may be located between the second branch valve 362 and the fifth branch valve 365.

Additionally, the fifth branch flow path 355 forms a path through which any one fluid that has passed through the first filter member 311 and the second filter member 312 flows. The fifth branch flow path 355 is coupled to and communicates with the third branch flow path 353 and the fourth branch flow path 354, respectively.

In the illustrated exemplary embodiment, the upper end of the fifth branch flow path 355 is coupled to and communicates with the downstream end of the third branch flow path 353 and the upstream end of the fourth branch flow path 354, respectively.

The fifth branch flow path 355 forms part of a plurality of paths through which a fluid passing through the first filter member 311 flows.

That is, any one fluid sequentially passes through the first filter member 311, the first branch flow path 351, the second filter member 312 and the third branch flow path 353 and then passes through the fifth branch flow path 355 to flow into the sixth branch flow path 356. The flow path is formed to allow any one fluid to pass through the first filter member 311 and the second filter member 312.

In addition, any one fluid may sequentially pass through the first filter member 311, the first branch flow path 351 and the second branch flow path 352, and then pass through the fifth branch flow path 355 to flow into the third filter member 313. The flow path is formed to allow any one fluid to pass through the first filter member 311 and the third filter member 313.

The sixth branch flow path 356 forms a path through which any one fluid that has passed through the first filter member 311 flows. The sixth branch flow path 356 is coupled to and communicates with the second branch flow path 352. In the illustrated exemplary embodiment, the upstream end of the sixth branch flow path 356 is coupled to and communicates with the downstream end of the second branch flow path 352.

The sixth branch flow path 356 forms a path through which any one fluid that has passed through the second filter member 312 flows. The sixth branch flow path 356 is coupled to and communicates with the fifth branch flow path 355. In the illustrated exemplary embodiment, the upstream end of the sixth branch flow path 356 is coupled to and communicates with the lower end of the fifth branch flow path 355.

Accordingly, it will be understood that any one fluid flowing in the sixth branch flow path 356 is a fluid that passes through the first filter member 311 and selectively passes through the second filter member 312.

The sixth branch flow path 356 communicates with the outlet flow path unit 220. Any one fluid flowing through the sixth branch flow path 356 may flow to the collecting member 320 through the outlet flow path unit 220. In the illustrated exemplary embodiment, the downstream end of the sixth branch flow path 356 is coupled to and communicates with the upstream end of the outlet flow path unit 220 (i.e., coupled to the downstream end of the seventh branch flow path 357).

A fifth branch valve 365 is disposed on the sixth branch flow path 356. The fifth branch valve 365 may open or close the sixth branch flow path 356 so as to allow or block communication between the sixth branch flow path 356 and the outlet flow path unit 220.

The seventh branch flow path 357 forms a path through which any one fluid that has passed through the third filter member 313 flows. The seventh branch flow path 357 is coupled to and communicates with the third filter member 313. In the illustrated exemplary embodiment, the upstream end of the seventh branch flow path 357 is coupled to and communicates with the downstream end of the third filter member 313.

Any one fluid flowing in the seventh branch flow path 357 may flow into the outlet flow path unit 220. The seventh branch flow path 357 is coupled to and communicates with the outlet flow path unit 220. In the illustrated exemplary embodiment, the downstream end of the seventh branch flow path 357 is coupled to and communicates with the upstream end of the outlet flow path unit 220.

A sixth branch valve 366 is disposed on the seventh branch flow path 357. The sixth branch valve 366 may open or close the seventh branch flow path 357 so as to allow or block communication between the third filter member 313 and the outlet flow path unit 220.

The detailed description of various flow paths for any one fluid, which are formed by opening or closing some of a plurality of branch flow paths 350, will be described below.

A branch valve 360 is provided on the branch flow path 350 to open or close the branch flow path 350. As the branch valve 360 operates, communication between the branch flow path 350 and each component coupled to and communicating with the branch flow path 350 is allowed or blocked such that a flow path for any one fluid can be formed in various ways.

The branch valve 360 may be provided in any form that can open or close the branch flow path 350. The branch valve 360 may be configured to be actuated by physical or electrical manipulation. In an exemplary embodiment, the branch valve 360 may be provided in the form of a solenoid valve that is operated by an electrical signal. In the above exemplary embodiment, the branch valve 360 may be energized with an external control unit (not illustrated).

A plurality of branch valves 360 may be provided. The plurality of branch valves 360 are disposed on a plurality of branch flow paths 350 and can open or close the plurality of branch flow paths 350, respectively.

In an exemplary embodiment where a plurality of branch valves 360 are provided, the plurality of branch valves 360 may be controlled independently from each other. In this case, some of the plurality of branch valves 360 may be operated in correspondence with other parts. By the above operation, the plurality of branch flow paths 350 are also opened or closed correspondingly to each other such that the flow path for any one fluid can be formed in various ways.

In the illustrated exemplary embodiment, the branch valve 360 includes a first branch valve 361, a second branch valve 362, a third branch valve 363, a fourth branch valve 364, a fifth branch valve 365 and a sixth branch valve 366.

The first branch valve 361 is provided on the first branch flow path 351 and is configured to open or close the first branch flow path 351. Accordingly, communication between the first filter member 311 and the second filter member 312 may be permitted or blocked.

Specifically, when the first branch valve 361 opens the first branch flow path 351, the first filter member 311 and the second filter member 312 may communicate with each other through the first branch flow path 351. Accordingly, any one fluid that has passed through the first filter member 311 may flow toward the second filter member 312.

When the first branch valve 361 closes the first branch flow path 351, communication between the first filter member 311 and the second filter member 312 is blocked. Accordingly, any one fluid that has passed through the first filter member 311 may flow toward the second branch flow path 352.

The second branch valve 362 is provided on the second branch flow path 352 and is configured to open or close the second branch flow path 352. Accordingly, communication between the first filter member 311 and the fifth branch flow path 355 or the sixth branch flow path 356 may be permitted or blocked.

Specifically, when the second branch valve 362 opens the second branch flow path 352, the first filter member 311 and the fifth branch flow path 355 or the sixth branch flow path 356 may communicate with each other by the second branch flow path 352. Accordingly, any one fluid that has passed through the first filter member 311 may flow into the fifth branch flow path 355 or the sixth branch flow path 356 through the second branch flow path 352.

When the second branch valve 362 closes the second branch flow path 352, communication between the first filter member 311 and the fifth branch flow path 355 or the sixth branch flow path 356 is blocked. Accordingly, any one fluid that has passed through the first filter member 311 may flow toward the second filter member 312.

The third branch valve 363 is provided on the third branch flow path 353 and is configured to open or close the third branch flow path 353. Accordingly, communication between the second filter member 312 and the fourth branch flow path 354 or the fifth branch flow path 355 may be permitted or blocked.

Specifically, when the third branch valve 363 opens the third branch flow path 353, the second filter member 312 and the fourth branch flow path 354 or the fifth branch flow path 355 may communicate with each other. Accordingly, any one fluid that has passed through the second filter member 312 may flow through the third branch flow path 353 and into the fourth branch flow path 354 or the fifth branch flow path 355.

When the third branch valve 363 closes the third branch flow path 353, communication between the second filter member 312 and the fourth branch flow path 354 or the fifth branch flow path 355 is blocked. Accordingly, any one fluid that has passed through the second filter member 312 cannot be discharged to the outside.

Accordingly, it will be understood that the third branch valve 363 operates to close the third branch flow path 353 when any one fluid does not flow into the second filter member 312.

The fourth branch valve 364 is provided on the fourth branch flow path 354 and is configured to open or close the fourth branch flow path 354. Accordingly, communication between the third filter member 313 and the first filter member 311 or the second filter member 312 may be permitted or blocked.

Specifically, when the fourth branch valve 364 opens the fourth branch flow path 354, the third filter member 313 and the third branch flow path 353 or the fifth branch flow path 355 may communicate with each other.

Accordingly, any one fluid that has passed through the first filter member 311 and flown along the second branch flow path 352 may flow to the third filter member 313 through the fifth branch flow path 355. Additionally, any one fluid that has passed through the second filter member 312 may flow to the third filter member 313 through the third branch flow path 353.

When the fourth branch valve 364 closes the fourth branch flow path 354, communication between the fourth branch flow path 354 and the third branch flow path 353 or the fifth branch flow path 355 is blocked. Accordingly, any one fluid that has passed through the first filter member 311 or the second filter member 312 cannot flow to the third filter member 313 and may flow along the sixth branch flow path 356.

The fifth branch valve 365 is provided on the sixth branch flow path 356 and is configured to open or close the sixth branch flow path 356. Accordingly, direct communication between the first filter member 311 or the second filter member 312 and the outlet flow path unit 220 may be permitted or blocked.

Specifically, when the fifth branch valve 365 opens the sixth branch flow path 356, the second branch flow path 352 and the fifth branch flow path 355 and the outlet flow path unit 220 are in communication. Accordingly, any one fluid that has passed through the first filter member 311 or the second filter member 312 may flow directly into the outlet flow path unit 220 without passing through the third filter member 313.

When the fifth branch valve 365 closes the sixth branch flow path 356, communication between the second branch flow path 352 and the fifth branch flow path 355 and the outlet flow path unit 220 is blocked. Accordingly, any one fluid that has passed through the first filter member 311 or the second filter member 312 may pass through the third filter member 313 and then flow into the outlet flow path unit 220.

The sixth branch valve 366 is provided on the seventh branch flow path 357 and is configured to open or close the seventh branch flow path 357. Accordingly, communication between the third filter member 313 and the outlet flow path unit 220 may be permitted or blocked.

Specifically, when the sixth branch valve 366 opens the seventh branch flow path 357, the third filter member 313 and the outlet flow path unit 220 communicate with each other. Accordingly, any one fluid that has passed through the third filter member 313 may flow into the outlet flow path unit 220.

When the sixth branch valve 366 closes the seventh branch flow path 357, communication between the third filter member 313 and the outlet flow path unit 220 is blocked. Accordingly, any one fluid that has passed through the third filter member 313 cannot be discharged to the outside.

Accordingly, it will be understood that the sixth branch valve 366 operates to close the seventh branch flow path 357 when any one fluid does not flow into the third filter member 313.

The plurality of branch valves 360 described above may operate independently and correspondingly to form a flow path through which any one fluid flows through the filter member 310.

First of all, a case where the introduced mixed fluid passes through all of the first to third filter members 311, 312, 313 and then flows into the outlet flow path unit 220 will be described.

In this case, the first to third filter members 311, 312, 313 must communicate with each other. To this end, the first branch valve 361, the third branch valve 363 and the fourth branch valve 364 are controlled to open the first branch flow path 351, the third branch flow path 353 and the fourth branch flow path 354, respectively.

Additionally, the third filter member 313 must be in communication with the outlet flow path unit 220 such that any one fluid that has passed through the third filter member 313 can flow into the outlet flow path unit 220. To this end, the sixth branch valve 366 is controlled to open the seventh branch flow path 357.

In this case, the second branch valve 362 and the fifth branch valve 365 are controlled to close the second branch flow path 352 and the sixth branch flow path 356, respectively.

Next, a case where the introduced mixed fluid passes only through the first filter member 311 and then flows into the outlet flow path unit 220 will be described.

In this case, the first filter member 311 must be blocked from communicating with the second filter member 312 and the third filter member 313. To this end, the first branch valve 361, the third branch valve 363, the fourth branch valve 364 and the sixth branch valve 366 are controlled to close the first branch flow path 351, the third branch flow path 353, the fourth branch flow path 354 and the seventh branch flow path 357, respectively.

Additionally, the second branch valve 362 and the fifth branch valve 365 are controlled to open the second branch flow path 352 and the sixth branch flow path 356, respectively.

Next, a case where the introduced mixed fluid passes through the first filter member 311 and the second filter member 312 and then flows into the outlet flow path unit 220 will be described.

In this case, the first filter member 311 must communicate with the second filter member 312. To this end, the first branch valve 361 and the third branch valve 363 are controlled to open the first branch flow path 351 and the third branch flow path 353, respectively. At the same time, the second branch valve 362 is controlled to close the second branch flow path 352.

Additionally, the second filter member 312 must be blocked from communicating with the third filter member 313. To this end, the fourth branch valve 364 and the sixth branch valve 366 are controlled to close the fourth branch flow path 354 and the seventh branch flow path 367, respectively.

Furthermore, a bypass path must be formed for the second filter member 312 to flow to the outlet flow path 220 without passing through the third filter member 313. To this end, the fifth branch valve 365 is controlled to open the sixth branch flow path 356.

Next, a case where the introduced mixed fluid passes through the first filter member 311 and the third filter member 313 and then flows into the outlet flow path unit 220 will be described.

In this case, communication between the first filter member 311 and the second filter member 312 must be blocked. To this end, the first branch valve 361 is controlled to close the first branch flow path 351, and the second branch valve 362 is controlled to open the second branch flow path 352. Accordingly, a bypass path is formed through which any one fluid that has passed through the first filter member 311 flows by bypassing the second filter member 312.

Additionally, the second branch flow path 352 must communicate with the third filter member 313. To this end, the fifth branch valve 365 is controlled to close the sixth branch flow path 356, and the fourth branch valve 364 is controlled to open the fourth branch flow path 354.

In this case, the third branch valve 363 is controlled to close the third branch flow path 353, thereby preventing any one fluid from flowing back into the second filter member 312. Additionally, the sixth branch valve 366 is controlled to open the seventh branch flow path 357 such that any one fluid that has passed through the third filter member 313 can flow into the outlet flow path unit 220.

Accordingly, the plurality of branch valves 360 operate independently of each other, but correspondingly such that the flow path of any one fluid can be formed in various ways.

A condition control unit 400 is configured to adjust the physical state of either the mixed fluid flowing in the fluid separation unit 300 or the any one separated fluid. By the condition control unit 400, the separation efficiency of the mixed fluid and the phase change and collection efficiency of any one separated fluid may be improved.

The condition control unit 400 is connected to the fluid separation unit 300. The condition control unit 400 may be provided in any form that is capable of controlling the condition of the mixed fluid or any one fluid flowing in the fluid separation unit 300. In an exemplary embodiment, the condition control unit 400 may be configured to control the temperature of the mixed fluid or any one fluid by heating or cooling the fluid separation unit 300.

In the illustrated exemplary embodiment, the condition control unit 400 includes a heating member 410 and a cooling member 420.

The heating member 410 heats the mixed fluid flowing into the fluid separation unit 300 and maintains the same in a gas phase. Accordingly, the separation efficiency of the mixed fluid in the filter member 310 may be improved.

The heating member 410 is connected to the filter member 310. In an exemplary embodiment where a plurality of filter members 310 are provided, the heating member 410 may be connected to each of the plurality of filter members 310 and may be configured to selectively heat the plurality of filter members 310.

In the illustrated exemplary embodiment, the heating member 410 is connected to the first to third filter members 311, 312, 313, respectively. In the above exemplary embodiment, the heating member 410 may be configured to heat the first to third filter members 311, 312, 313 independently of each other.

The heating member 410 may be provided in any form that can increase the temperature by heating other members. In an exemplary embodiment, the heating member 410 may be provided in the form of a heater.

The cooling member 420 cools any one separated fluid and condenses the same into a liquid phase. Accordingly, the phase change and collection efficiency of any one separated fluid may be improved.

The cooling member 420 is connected to the collecting member 320. The cooling member 420 may be provided in any form that is capable of cooling any one fluid introduced into the collecting member 320. In an exemplary embodiment, the cooling member 420 may be provided in the form of a chiller.

A utility unit 500 is configured to detect the condition of either the mixed fluid or any one separated fluid flowing in the flow path unit 200. Additionally, the utility unit 500 is configured to control the flow of either the mixed fluid or any one separated fluid.

The utility unit 500 is provided in the flow path unit 200. In the illustrated exemplary embodiment, the utility unit 500 is provided in the inlet flow path unit 210 and the outlet flow path unit 220. Alternatively, the utility unit 500 may also be provided on the exhaust flow path unit 230 and the collecting flow path unit 240.

The utility unit 500 conducts electricity with an external control unit (not illustrated). Power and control signals required for the utility unit 500 to operate may be transmitted from an external control unit (not illustrated). Various information detected by the utility unit 500 may be transmitted to an external control unit (not illustrated) in the form of electrical signals.

In the illustrated exemplary embodiment, the utility unit 500 includes a particle filter member 510, a pressure control member 520, a flow rate control member 530, a sensor member 540 and a valve member 550.

The particle filter member 510 is configured to filter particulate matter that is present in the mixed fluid introduced through the inlet communication unit 110. The introduced mixed fluid may flow into the fluid separation unit 300 after the particulate matter is removed. Accordingly, clogging of the fluid separation unit 300 may be prevented, and separation efficiency in the fluid separation unit 300 may be improved.

The particle filter member 510 may be provided in any form that is capable of filtering particulate matter. In an exemplary embodiment, the particle filter member 510 may be provided to include a mesh-shaped filter including a plurality of through-holes.

The particle filter member 510 may be disposed biased on the upstream side of the flow path unit 200. This is to filter particulate matter after the mixed fluid enters the inlet flow path unit 210 and before it flows to another configuration. In the exemplary embodiment illustrated in FIG. 2, the particle filter member 510 is located on the downstream side of the valve element 550, to be adjacent to the inlet communication 110.

The pressure control member 520 is configured to control the pressure of the flow path unit 200 or the mixed fluid flowing within the flow path unit 200. As the pressure control member 520 creates a negative pressure or positive pressure, the mixed fluid may flow inside the flow path unit 200 without a separate transfer member.

The pressure control member 520 may be provided in any form that is capable of controlling pressure. In an exemplary embodiment, the pressure control member 520 may be provided in the form of a compressor or pump.

The pressure control member 520 may be disposed to be biased on the upstream side of the flow path unit 200. This is so that the pressure of the mixed fluid is controlled immediately after it flows into the inlet flow path unit 210 such that it flows quickly. In the exemplary embodiment illustrated in FIG. 2, the pressure control member 520 is located on the downstream side of the particle filter member 510, to be adjacent to the inlet communication 110.

The flow rate control member 530 is configured to control the flow rate of the mixed fluid flowing inside the flow path unit 200. Accordingly, the flow rate of the mixed fluid flowing inside the flow path unit 200 may also be controlled.

The flow rate control member 530 may be provided in any form that is capable of controlling the flow speed or flow rate of the flowing fluid. In an exemplary embodiment, the flow rate control member 530 may be provided in the form of a butterfly valve.

The sensor member 540 is configured to detect information about the condition of the mixed fluid or any one fluid flowing in the flow path unit 200. The sensor member 540 may transmit detected information to an external control unit (not illustrated).

A plurality of sensor members 540 may be provided. The plurality of sensor members 540 may be disposed at various locations on the flow path unit 200. In the illustrated exemplary embodiment, a part of the sensor member 540 is disposed in the inlet flow path unit 210 to detect information about the condition of the mixed fluid. Another part of the sensor member 540 is disposed in the outlet flow path unit 220 to detect information about the condition of any one fluid.

The sensor member 540 may be provided in any form that is capable of detecting information about the condition of the flowing fluid. In the illustrated exemplary embodiment, the sensor member 540 includes a flow rate sensor 541 and a pressure sensor 542.

Although not illustrated, the sensor member 540 may further include a sensor for detecting the flow rate and temperature of the flowing fluid.

The flow sensor 541 detects information about the flow rate of the fluid flowing in the flow path unit 200. The detected information is transmitted to an external control unit (not illustrated) and used to calculate control information for controlling the flow rate control member 530. That is, in an exemplary embodiment, the operation of the flow rate control member 530 may be controlled in conjunction with information detected by the flow rate sensor 541.

A plurality of flow sensors 541 may be provided. The plurality of flow sensors 541 may each detect information about the flow rate of the mixed fluid and any one fluid.

In the illustrated exemplary embodiment, two flow sensors 541 are provided. Any one flow rate sensor 541 is located between the pressure control member 520 and the filter member 310 on the inlet flow path unit 210 and detects information about the flow rate of the mixed fluid.

Another flow rate sensor 541 is located on the outlet flow path unit 220, between the outlet communication unit 120 and the collecting member 320 and detects information about the flow rate of any one fluid.

The pressure sensor 542 detects information about the pressure of the fluid flowing in the flow path unit 200. The detected information is transmitted to an external control unit (not illustrated) and used to calculate control information for controlling the pressure control member 520. That is, in an exemplary embodiment, the operation of the pressure control member 520 may be controlled in conjunction with information detected by the pressure sensor 542.

A plurality of pressure sensors 542 may be provided. The plurality of pressure sensors 542 may each detect information about the pressure of the mixed fluid and any one fluid.

In the illustrated exemplary embodiment, two pressure sensors 542 are provided. Any one pressure sensor 542 is located between the flow rate sensor 541 and the filter member 310 on the inlet flow path unit 210 and detects information about the pressure of the mixed fluid.

Another pressure sensor 542 is located between the filter member 310 and the collecting member 320 on the outlet flow path unit 220 and detects information about the pressure of any one fluid.

The valve member 550 allows or blocks communication between the flow path unit 200 and the communication unit 100. Accordingly, external mixed fluid may flow into or be blocked from flowing into the fluid recovery system 10.

The valve member 550 may be located to be adjacent to the upstream side of the flow path unit 200. In the illustrated exemplary embodiment, the valve member 550 is located on the downstream side of the inlet communication unit 110, to be adjacent to the upstream end of the inlet flow path unit 210.

Accordingly, when the valve member 550 opens the inlet flow path unit 210, the external mixed fluid may flow into the fluid recovery system 10 and be separated. When the valve member 550 closes the inlet flow path unit 210, the external mixed fluid does not flow into the fluid recovery system 10.

(2) Description of the configuration of the fluid recovery system 20 according to another exemplary embodiment of the present invention

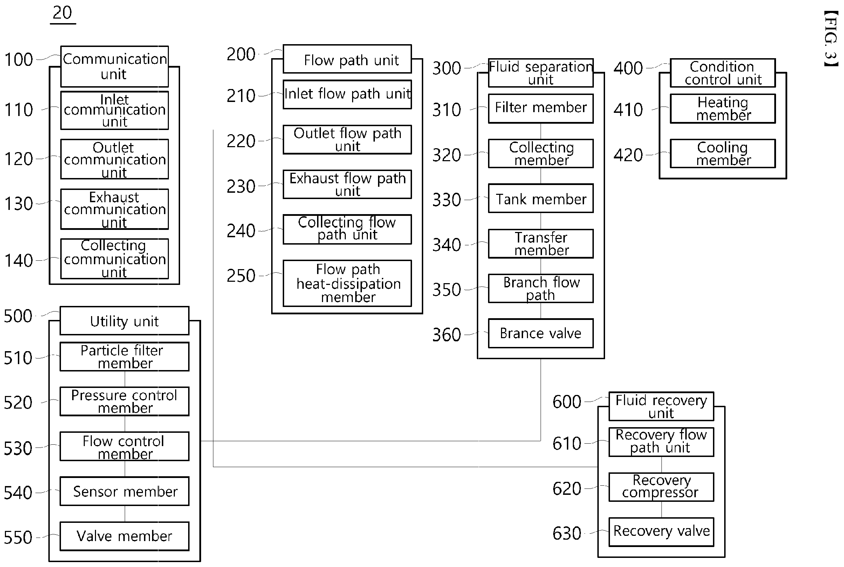

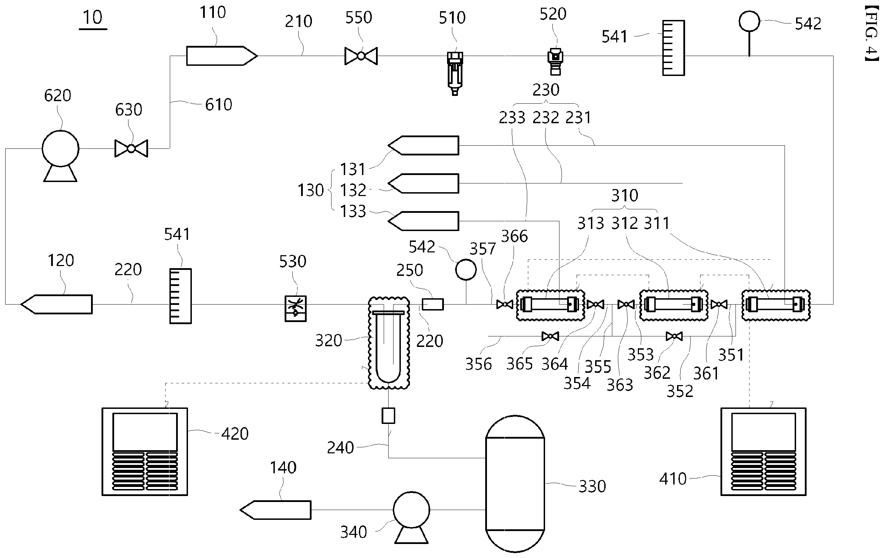

Referring to FIGS. 3 to 4, the fluid recovery system 20 according to another exemplary embodiment of the present invention is illustrated.

The fluid recovery system 20 according to the present exemplary embodiment further includes a fluid recovery unit 600, and thus, any one fluid that has been discharged and recovered through the outlet flow path unit 220 and the outlet communication unit 120 may be supplied again through the inlet communication unit 110. That is, the fluid recovery system 20 according to the present exemplary embodiment may be defined as a circulation system.

Accordingly, in the fluid recovery system 20 according to the present exemplary embodiment, any one fluid that has been discharged through the outlet communication unit 120, that is, the remaining fluid that has not undergone a phase change and is not collected, may undergo a separation and recovery process again. Accordingly, the recovery efficiency of any one fluid may be improved.

In the illustrated exemplary embodiment, the fluid recovery system 20 includes a communication unit 100, a flow path unit 200, a fluid separation unit 300, a condition control unit 400, a utility unit 500 and a fluid recovery unit 600.

Excluding the fluid recovery unit 600 and the coupling and communication relationship between the fluid recovery unit 600 and other components, the other components and the coupling relationship between each component are identical to each component of the fluid recovery system 10 according to the above-described exemplary embodiment. Accordingly, the descriptions of the communication unit 100, the flow path unit 200, the fluid separation unit 300, the condition control unit 400 and the utility unit 500 will be replaced with the above-described descriptions.

The fluid recovery unit 600 is coupled to and communicates with the communication unit 100. Any one fluid that has been discharged through the outlet communication unit 120 may pass through the fluid recovery unit 600 and flow into the inlet communication unit 110. The fluid recovery unit 600 is coupled to and communicates with the inlet communication unit 110 and the outlet communication unit 120, respectively.

In the illustrated exemplary embodiment, the fluid recovery unit 600 includes a recovery flow path unit 610, a recovery compressor 620 and a recovery valve 630.

The recovery flow path unit 610 communicates with the inlet communication unit 110 and the outlet communication unit 120. The remaining fluid that has been discharged through the outlet communication unit 120 may be supplied to the inlet communication unit 110 through the recovery flow path unit 610.

The recovery compressor 620 is coupled to and communicates with the recovery flow path unit 610. The recovery compressor 620 provides a transfer force to the remaining fluid flowing inside the recovery flow path unit 610. The remaining fluid may flow from the outlet communication unit 120 to the inlet communication unit 110 through the recovery flow path unit 610 by the transfer force provided by the recovery compressor 620.

Additionally, the recovery compressor 620 controls the pressure of the remaining fluid flowing inside the recovery flow path unit 610. Accordingly, the pressure of the fluid flowing into the inlet communication unit 110 may be appropriately controlled.

The recovery valve 630 opens or closes the recovery flow path unit 610. As the recovery valve 630 is operated, communication between the inlet communication unit 110 and the outlet communication unit 120 may be permitted or blocked.

The recovery valve 630 may be provided in any form that can open or close the recovery flow path unit 610. In an exemplary embodiment, the recovery valve 630 may be provided in the form of a solenoid valve operated by an electrical signal.

The operation of the recovery valve 630 may be linked to the operation of the branch valve 360. That is, the recovery valve 630 is controlled such that any one of the fifth branch valve 365 and the sixth branch valve 366 opens any one of the sixth branch flow path 356 and the seventh branch flow path 357. In this case, the recovery flow path unit 610 may be controlled to open.

Accordingly, when the remaining fluid passes through the fluid separation unit 300, the inlet communication unit 110 and the outlet communication unit 120 communicate with each other such that the other fluids can be circulated again.

### 3. Description of the fluid recovery method according to an exemplary embodiment of the present invention

The fluid recovery method according to an exemplary embodiment of the present invention may be performed by using the fluid recovery systems 10, 20 according to each of the above-described exemplary embodiments. The fluid recovery method can effectively collect and recover any one fluid to be recovered among a plurality of fluids mixed in the mixed fluid.

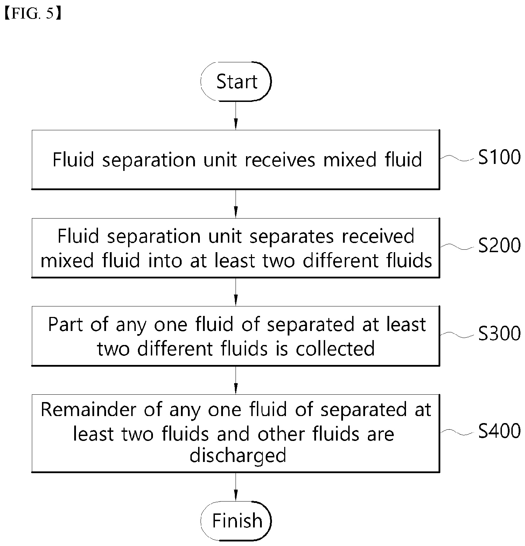

Hereinafter, the fluid recovery method according to each exemplary embodiment of the present invention will be described in detail with reference to FIGS. 5 to 11.

### (1) Description of the fluid recovery method according to an exemplary embodiment of the present invention

Referring to FIGS. 5 to 9, the fluid recovery method according to an exemplary embodiment of the present invention is illustrated. The fluid recovery method according to the present exemplary embodiment may be performed by using the fluid recovery system 10 according to an exemplary embodiment of the present invention.

In the illustrated exemplary embodiment, the fluid recovery method includes the steps of receiving a mixed fluid by a fluid separation unit 300 (S100), separating the received mixed fluid into at least two different fluids by the fluid separation unit 300 (S200), collecting a part of any one fluid of the separated at least two different fluids (S300), and discharging the remainder of any one fluid of the separated at least two different fluids and the other fluids (S400).

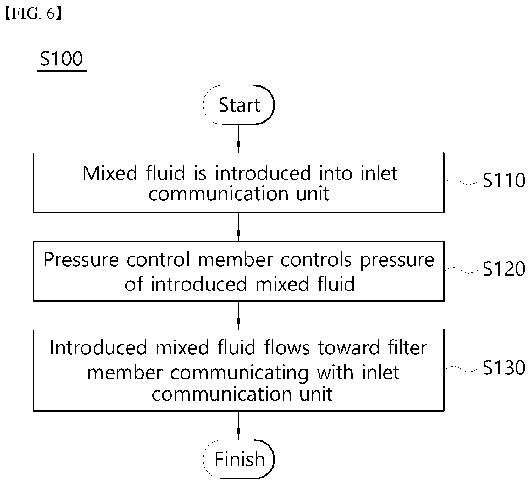

Referring to FIG. 6, the step (S100) in which the fluid separation unit 300 receives the mixed fluid will be described in detail. This step (S100) is a step (S100) in which the mixed fluid is supplied from the outside and flows into the fluid separation unit 300 along the flow path unit 200.

First of all, the mixed fluid flows into the inlet communication unit 110 (S110). To this end, the valve member 550 is controlled to open the inlet flow path unit 210. The introduced mixed fluid first passes through the particle filter member 510, and particulate matter is removed.

The pressure of the mixed fluid flowing along the inlet flow path unit 210 is controlled by the pressure control member 520 (S120). Accordingly, the flow rate or flow speed of the mixed fluid may also be controlled.

The mixed fluid flowing into the fluid separation unit 300 is located at the most upstream side of the fluid separation unit 300 and flows into the filter member 310 in communication with the inlet flow path unit 210 (S130).

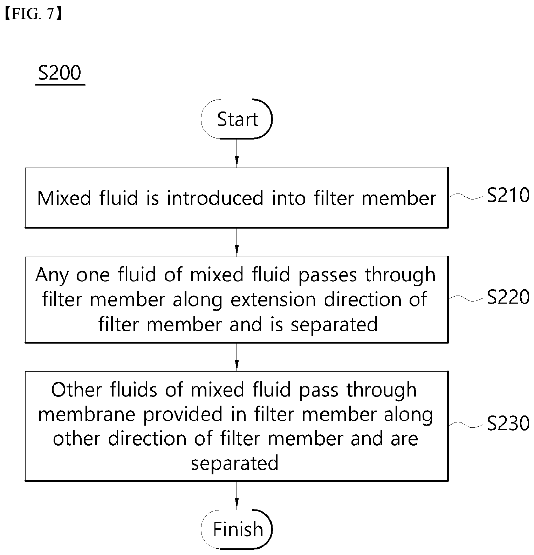

Referring to FIG. 7, the step (S200) in which the fluid separation unit 300 separates the delivered mixed fluid into at least two different fluids will be described in detail. This step (S200) is a step (S200) in which the mixed fluid flowing into the fluid separation unit 300 passes through the filter member 310 and is separated into a plurality of fluids.

The mixed fluid flowing along the inlet flow path unit 210 flows into the filter member 310 (S210). In this case, a plurality of filter members 310 are provided, and the plurality of filter members 310 may communicate with or be blocked from each other by a plurality of branch flow paths 350 and a plurality of branch valves 360.

However, in any case, as described above, the introduced mixed fluid flows through at least one filter member 310 and then is discharged.

Among the mixed fluid flowing into the filter member 310, any one fluid to be collected and recovered passes through the filter member 310 along the extension direction of the filter member 310 and is separated (S220).

In this case, the heating member 410 may heat the mixed fluid flowing into the filter member 310. Accordingly, the separation efficiency of the mixed fluid may be improved.

Additionally, among the mixed fluid flowing into the filter member 310, the other fluids to be separated and discharged are separated while passing through the membrane provided in the filter member 310 along different directions of the filter member 310 (S230).

In an exemplary embodiment, the other direction of the filter member 310 may be a radial direction. It will be understood that this corresponds to an exemplary embodiment in which the filter member 310 is provided in the form of a membrane filter.

When the mixed fluid passes through a plurality of filter members 310, any one fluid that has been separated from the filter member 310 located on the upstream side, for example, the first filter member 311, may flow into the second filter member 312 or the third filter member 313. Additionally, the separation process may be performed again on any one fluid separated from the second filter member 312 or the third filter member 313 according to the step (S220).

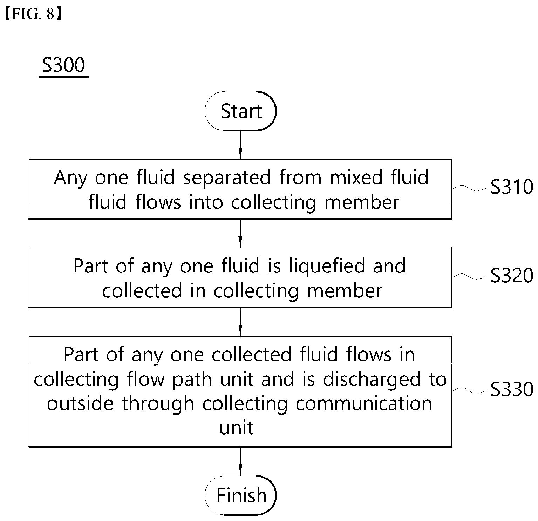

Referring to FIG. 8, the step (S300) in which a part of any one fluid among at least two different separated fluids is collected will be described in detail. This step (S300) is a step (S300) in which any one fluid to be collected and recovered that has been separated from the mixed fluid is collected, discharged and recovered.

Any one fluid that passes through the filter member 310 and is separated from the mixed fluid flows into the collecting member 320 (S310). Any one fluid flowing into the collecting member 320 is liquefied and collected (S320).

In this case, before flowing into the collecting member 320, any one fluid may be cooled by the flow path heat-dissipation member 250. Additionally, any one fluid flowing into the collecting member 320 may be cooled by the cooling member 420.

In the illustrated exemplary embodiment, a part of any one fluid is illustrated to be liquefied and collected. This is in consideration of the fact that it is difficult to liquefy and collect all of any one fluid in an actual process, and it will be understood that it is most desirable for all of any one fluid to be liquefied and collected.

Any one collected fluid flows along the collecting flow path unit 240 in communication with the collecting member 320 and is accommodated in the tank member 330. Any one fluid accommodated in the tank member 330 flows by the transfer force applied by the transfer member 340, and is discharged and recovered through the collecting communication unit 140 (S330).

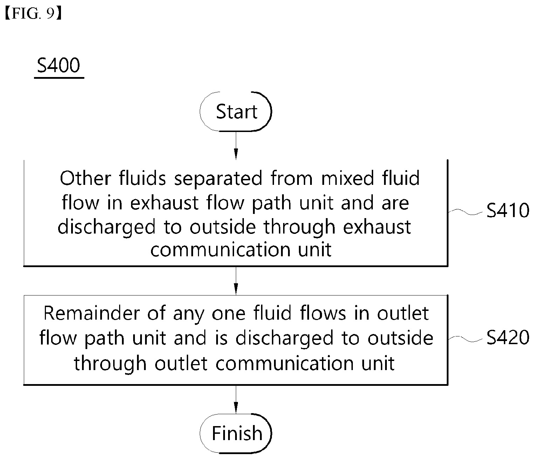

Referring to FIG. 9, the step (S400) in which the remainder of any one fluid and the other fluids among the at least two separated different fluids are discharged will be described in detail. This step (S400) is a step (S400) in which any one fluid that has not yet been collected and recovered after being separated from the mixed fluid and the other fluids separated from the mixed fluid are discharged to the outside.

First of all, the other fluids that have been separated from the mixed fluid flows along the exhaust flow path unit 230 and is discharged to the outside through the exhaust communication unit 130 (S410). As described above, in an exemplary embodiment where a plurality of filter members 310 are provided, a plurality of exhaust flow path units 230 and a plurality of exhaust communication units 130 are also provided and can communicate with the plurality of filter members 310, respectively, as described above.

In addition, the remainder of any remaining one fluid that cannot be separated after passing through the fluid separation unit 300 flows along the outlet flow path unit 220, is discharged to the outside of the outlet communication unit 120, and is recovered (S420).

### (2) Description of the fluid recovery method according to another exemplary embodiment of the present invention

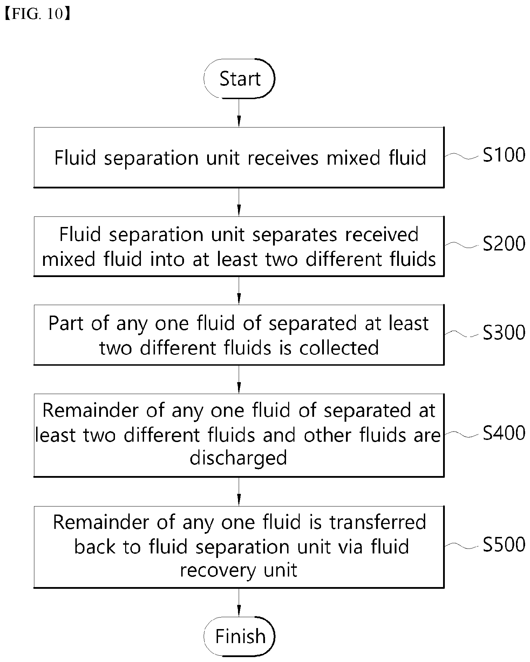

Referring to FIGS. 10 to 11, the fluid recovery method according to another exemplary embodiment of the present invention is illustrated.

The fluid recovery method according to the present exemplary embodiment may be performed by using the fluid recovery system 20 according to another exemplary embodiment as described above.

In the illustrated exemplary embodiment, the fluid recovery method includes the steps of receiving a mixed fluid by a fluid separation unit 300 (S100), separating the received mixed fluid into at least two different fluids by the fluid separation unit 300 (S200), collecting a part of any one fluid of the separated at least two different fluids (S300), discharging the remainder of any one fluid of the separated at least two different fluids and the other fluids (S400), and transferring the remainder of any one fluid back to the fluid separation unit 300 through a fluid recover unit 600 (S500).

Steps S100, S200, S300 and S400 of the fluid recovery method according to the present exemplary embodiment are the same as the fluid recovery method according to the above-described exemplary embodiment.

Accordingly, the following description will be explained by focusing on step S500.

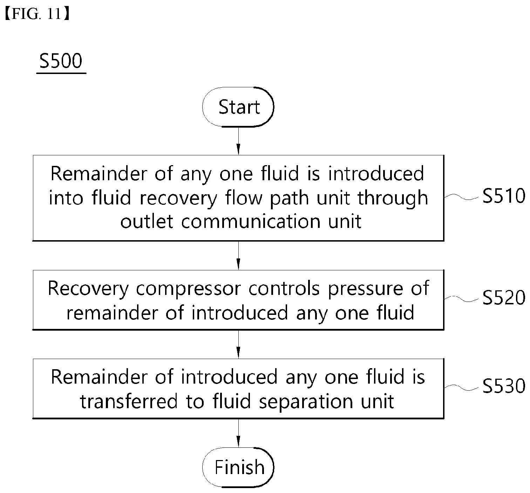

Referring to FIG. 11, the step (S500) in which the remainder of any one fluid is transferred back to the fluid separation unit 300 through the fluid recovery unit 600 will be described in detail. This step (S500) is a step (S500) in which any one fluid that has not been collected or recovered after being separated from the mixed fluid flows back to the fluid separation unit 300, and the separation process is performed again.

The remainder of any one fluid that has passed through the collecting member 320 but has not undergone a phase change or been collected flows along the outlet flow path unit 220. The remainder of any one introduced fluid flows into the recovery flow path unit 610 through the outlet communication unit 120 (S510).

The recovery compressor 620 controls the pressure of the remainder any one introduced fluid (S520). Accordingly, the movement speed and pressure of the remaining fluid may be controlled such that the remainder of any one fluid can be stably supplied to the inlet communication unit 110.

The remainder of any one introduced fluid flows along the inlet flow path unit 210 and is then transferred to the fluid separation unit 300 (S530). Thereafter, the steps of receiving a mixed fluid by the above-described fluid separation unit 300 (S100), separating the received mixed fluid into at least two different fluids by the fluid separation unit 300 (S200), collecting a part of any one fluid of the separated at least two different fluids (S300), and discharging the remainder of any one fluid of the separated at least two different fluids and the other fluids (S400) are performed, and the separation process may be performed again.

Although the exemplary embodiments of the present invention have been described above, the spirit of the present invention is not limited to the exemplary embodiments presented in the present specification, and those skilled in the art who understand the spirit of the present invention may easily suggest other exemplary embodiments by changing, modifying, deleting or adding components within the scope of the same spirit, but this will also fall within the scope of the present invention.

| | | | |
|---|---|---|---|
| 10, 20: | Fluid recovery system | 100: | Communication unit |
| 110: | Inlet communication unit | 120: | Outlet communication unit |
| 130: | Exhaust communication unit | 131: | First exhaust communication unit |
| 132: | Second exhaust communication unit | 133: | Third exhaust communication unit |
| 140: | Collecting communication unit | 200: | Flow path unit |
| 210: | Inlet flow path unit | 220: | Outlet flow path unit |
| 230: | Exhaust flow path unit | 231: | First exhaust flow path unit |
| 232: | Second exhaust flow path unit | 233: | Third exhaust flow path unit |
| 240: | Collecting flow path unit | 250: | Flow path heat-dissipation member |
| 300: | Fluid separation unit | 310: | Filter member |
| 311: | First filter member | 312: | Second filter member |
| 313: | Third filter member | 320: | Collecting member |
| 330: | Tank member | 340: | Transfer member |
| 350: | Branch flow path | 351: | First branch flow path |
| 352: | Second branch flow path | 353: | Third branch flow path |
| 354: | Fourth branch flow path | 355: | Fifth branch flow path |
| 356: | Sixth branch flow path | 357: | Seventh branch flow path |
| 360: | Branch valve | 361: | First branch valve |
| 362: | Second branch valve | 363: | Third branch valve |
| 364: | Fourth branch valve | 365: | Fifth branch valve |
| 366: | Sixth branch valve | 400: | Condition control unit |
| 410: | Heating member | 420: | Cooling member |
| 500: | Utility unit | 510: | Particle filter member |
| 520: | Pressure control member | 530: | Flow rate control member |
| 540: | Sensor member | 541: | Flow sensor |
| 542: | Pressure sensor | 550: | Valve member |
| 600: | Fluid recovery unit | 610: | Recovery flow path unit |
| 620: | Recovery compressor | 630: | Recovery valve |

## Claims

1. A fluid recovery system, comprising:
a communication unit which communicates with the outside and introduces a mixed fluid; and
a fluid separation unit which is configured to communicate with the communication unit and separate the introduced mixed fluid into at least two different fluids,
wherein the fluid separation unit comprises:
a filter member which is configured to communicate with the communication unit, receive the introduced mixed fluid, and separate the received mixed fluid into the at least two different fluids; and
a collecting member which is configured to communicate with the filter member and collect a part of any one fluid of the separated fluids,
wherein the communication unit comprises:
a collecting communication unit which is configured to communicate with the outside and discharge the part of the any one fluid of the separated fluids; and
an exhaust communication unit which is configured to communicate with the outside and discharge the other fluids from among the separated fluids,
wherein the part of the any one fluid and the other fluids may be in different phases.

2. The fluid recovery system of claim 1, wherein a plurality of filter members are provided, and the plurality of filter members are configured to communicate with each other, and
wherein the introduced mixed fluid passes through at least any one of the plurality of filter members and is configured to be separated into at least two different fluids.

3. The fluid recovery system of claim 2, wherein the filter member comprises:
a first filter member which communicates with the communication unit, and into which the mixed fluid is introduced;
a second filter member which communicates with the first filter member and is located on the downstream side of the first filter member; and
a third filter member which communicates with the second filter member and is located on the downstream side of the second filter member.

4. The fluid recovery system of claim 3, wherein the fluid separation unit comprises:
a branch flow path which is coupled to each of the first filter member, the second filter member and the third filter member, and communicates the first filter member, the second filter member and the third filter member with each other; and
a branch valve which is provided in the branch flow path and is configured to allow or block the communication of at least any two of the first filter member, the second filter member and the third filter member.

5. The fluid recovery system of claim 4, wherein a plurality of branch flow paths are provided, and each of the plurality of branch flow paths is configured to communicate a different pair of filter members among the first filter member, the second filter member and the third filter member with the communication unit, and
wherein a plurality of branch valves are provided, and the plurality of branch valves are respectively positioned in the plurality of branch flow paths, and are configured to open or close at least any one branch flow path among the plurality of branch flow paths.

6. The fluid recovery system of claim 1, wherein the filter member is formed to extend in one direction and is provided with a membrane filter comprising a plurality of hollow fibers,
wherein the any one fluid flows in the one direction, is separated from the mixed fluid, passes through the filter member, and flows into the collecting communication unit, and
wherein the other fluids flow in the other direction, pass through the hollow fiber, are separated from the mixed fluid, and flow into the exhaust communication unit.

7. The fluid recovery system of claim 6, wherein the other fluids are composed of a mixture of different fluids,
wherein a plurality of filter members are provided, and the shape of the hollow fibers provided by each of the plurality of filter members are formed to be different from each other, and
wherein the plurality of filter members are configured to filter different fluids among the plurality of fluids mixed with the other fluids.

8. The fluid recovery system of claim 6, wherein the area of a membrane provided in the membrane filter is determined in proportion to the flow rate of the introduced mixed fluid.

9. The fluid recovery system of claim 1, further comprising:
a condition control unit which is connected to the fluid separation unit and is configured to heat or cool the filter member or the collecting member.

10. The fluid recovery system of claim 9, wherein the condition control unit comprises:
a heating member which is connected to the filter member and is configured to heat the filter member; and
a cooling member which is connected to the collecting member and is configured to cool the collecting member.

11. The fluid recovery system of claim 1, further comprising:
a flow path unit which is respectively coupled to the communication unit and the fluid separation unit, and communicates the communication unit and the fluid separation unit,
wherein the flow path unit comprises:
a collecting flow path unit which is respectively coupled to the filter member and the collecting member, and through which part of the any one fluid that has passed through the filter member flows by communicating the filter member and the collecting member.

12. The fluid recovery system of claim 11, wherein the flow path unit comprises:
a flow path heat-dissipation member which is provided in the collecting flow path unit and is configured to cool the any one fluid flowing therethrough.

13. The fluid recovery system of claim 1, wherein the communication unit comprises:
an inlet communication unit which communicates with the outside to receive the mixed fluid; and
an outlet communication unit which communicates with the outside to transfer the remainder of the any one fluid,
wherein the fluid recovery system further comprises:
a fluid recovery unit which is respectively connected to the inlet communication unit and the outlet communication unit, and transfers the remainder of the any one fluid to the inlet communication unit.

14. A method for recovering a fluid, comprising the steps of:
(a) receiving a mixed fluid by a fluid separation unit;
(b) separating the received mixed fluid into at least two different fluids by the fluid separation unit;
(c) collecting a part of any one fluid of the separated at least two different fluids; and
(d) discharging the remainder of any one fluid of the separated at least two different fluids and the other fluids.

15. The method of claim 14, wherein step (a) comprises:
step (a1) in which the mixed fluid is introduced into the inlet communication unit;
step (a2) in which a pressure control member controls the pressure of the introduced mixed fluid; and
step (a3) in which the introduced mixed fluid flows toward a filter member that communicates with the inlet communication unit.

16. The method of claim 14, wherein step (b) comprises:
(b1) introducing the mixed fluid into a filter member;
(b2) separating the any one fluid of the mixed fluid while passing through the filter member along the extension direction of the filter member; and
(b3) separating the other fluids among the mixed fluid while passing through a membrane provided in the filter member along the other direction of the filter member.

17. The method of claim 14, wherein step (c) comprises:
step (c1) in which the any one fluid of the fluids separated from the mixed fluid is introduced into a collecting member;
step (c2) in which a part of the any one fluid is liquefied and collected in the collecting member; and
step (c3) in which the part of the collected any one fluid flows in a collecting flow path unit, and is discharged to the outside through a collecting communication unit.

18. The method of claim 14, wherein step (d) comprises:
step (d1) in which the other fluids that have been separated from the mixed fluid flow in an exhaust flow path unit, and are discharged to the outside through an exhaust communication unit; and
step (d2) in which the remainder of any one fluid flows in a discharge flow path unit, and is discharged to the outside through a discharge communication unit.

19. The method of claim 14, further comprising after step (d):
(e) transferring the remainder of the any one fluid back to the fluid separation unit through a fluid recovery unit,
wherein step (e) comprises:
step (e1) in which the remainder of the any one fluid is introduced into a recovery flow path unit through a discharge communication unit;
step (e2) in which a recovery compressor controls the pressure of the remainder of the introduced any one fluid; and
step (e3) in which the remainder of the introduced any one fluid is transferred to the fluid separation unit.
